(19) **Europäisches Patentamt**
**European Patent Office**
**Office européen des brevets**

(11) **EP 2 360 870 B1**

(12) **EUROPEAN PATENT SPECIFICATION**

(45) Date of publication and mention
of the grant of the patent:
**17.12.2014 Bulletin 2014/51**

(51) Int Cl.:
*H04L 12/24* *(2006.01)*      *H04L 1/00* *(2006.01)*

(21) Application number: **10290067.7**

(22) Date of filing: **12.02.2010**

(54) **Process and device for managing a network**

Verfahren und Vorrichtung zur Verwaltung eines Netzwerks

Procédé et dispositif pour gérer un réseau

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**24.08.2011 Bulletin 2011/34**

(73) Proprietor: **CANON KABUSHIKI KAISHA
Tokyo (JP)**

(72) Inventors:
• **Sevin, Julien
35140 Saint Aubin du Cormier (FR)**
• **Tannhäuser, Falk
35000 Rennes (FR)**

(74) Representative: **Santarelli
49, avenue des Champs Elysées
75008 Paris (FR)**

(56) References cited:
**FR-A1- 2 932 630      GB-A- 2 458 540
US-A1- 2002 090 966**

• **EFFROS M ET AL: "Rate rRegions for coherent
and noncoherent multisource network error
correction" INFORMATION THEORY, 2009. ISIT
2009. IEEE INTERNATIONAL SYMPOSIUM ON,
IEEE, PISCATAWAY, NJ, USA, 28 June 2009
(2009-06-28), pages 1001-1005, XP031513799
ISBN: 978-1-4244-4312-3**

**Description**

The present invention relates to a process and a device for managing a network. It applies to Telecommunication Networks, and in particular to wired or wireless meshed networks based on relay nodes retransmitting messages received from source nodes to destination nodes. The messages retransmitted by the relay nodes are linear combinations, in a suitable Galois Field, of the messages received from the source nodes. This technique, called "Network Coding", increases the data rate and efficiently utilizes the network capacity while improving robustness.

A wired or wireless meshed communication network comprises a set of K source nodes, a set of N relay nodes and a set of D destination nodes. Each message issued by any one of the source nodes will finally be received by all destination nodes. The network topology is determined by the connections between said nodes. In the case of a wired network, a connection corresponds to a physical wire between two nodes. On the other hand, in the case of a wireless network, the presence or absence of a connection between two nodes is a function of the radio signal strength received by the receiving node, and hence depends, among others, on the transmission power, the transmission and reception antenna characteristics, the distance, the presence of obstacles or of reflections of radio waves.

During data transmissions in a network, transmission errors may occur in many different circumstances as, for example, in the case of radio signal fading due to moving obstacles, or electromagnetic interference. Some of these errors lead to data losses which are immediately detectable at the respective data destination, for example through analyzing the Radio Signal Strength Indication ("RSSI") or the Signal-to-Noise Ratio ("SNR"). Other errors lead to random alterations of data symbols at unknown positions. The use of dedicated techniques is necessary to detect these errors.

To solve this problem, it is known to provide the relay nodes with the ability of performing network coding through a distributed error correction code. In the following part of this document, a communication network has an error correction network capacity equal to R if a distributed error correction network code having an error correction capacity equal to R does exist. It should be noted that an error correction capacity equal to R means that two times the number of erroneous symbols (caused by radio transmissions errors) plus the number of erasure symbols (caused by link failures) must be inferior to R to allow successful decoding.

In a point-to-point transmission, there is a "connection" between an emitter node and a receiver node if and only if the data sent by the emitter are received by the receiver node with an "acceptable" number of errors (often zero errors).

In a wired network, a connection corresponds to a physical link (Ethernet, optical cable, etc.) between the two nodes because the bit error rate over a wire link is very low. Then, the configuration of a connection corresponds to adding or removing the corresponding physical link.

In a wireless network, to know if there is a connection between two nodes, a value relating to the quality of a reception is measured as, for example, the Signal Noise Ratio (SNR), the Radio Signal Strength Indication (RSSI) or additional information like a Cyclic Redundancy Check (CRC) contained in the received packet. A predetermined condition based on this value is checked (for example RSSI or SNR must be at least equal to a predetermined radio threshold value, or a CRC detects at least one error) to determine the existence of a connection. In theory (under "ideal" conditions), the value of the received power is given by the well known Friis formula:

$$P_r \; = \; \frac{G_r G_e P_e \lambda^2}{(4\pi d)^2}$$

in which $P_r$ is the received power, $P_e$ the power at emitter antenna, $G_e$ the emitter antenna gain, $G_r$ the receiver antenna gain, $\lambda$ the wavelength of the carrier and d the distance.

Moreover, the Signal Noise Ratio is given by the formula:

$$SNR = 10 Log_{10}(\frac{P_r}{P_b + P_i})$$

In which $P_b$ is the background noise and $P_i$ is the interference noise,

Then, if the background noise and the interference noise are constant, the higher the received power, the better the reception quality, and the higher the possibility to have a connection.

The criteria to configure the nodes so as to have a connection between two nodes are then as follows:

1. Modifying the emitter and/or receiver antenna gains (Gr or Ge):

the higher the emitter and receiver gain, the higher the received power. The antenna gain is defined as the ratio of the antenna radiation intensity in a given direction, to the intensity of the same antenna as it radiates in all directions (isotropically). Thus, by definition, the more the emitter (respectively the receiver) antenna is beamed to the receiver (respectively, the emitter) node, the more the antenna gain increases. Thus, the system can adjust the directivity of the antenna to have a connection between two nodes.

2. Modifying the transmitted power configuration: the higher the transmitted power, the higher the received power. The system can automatically configure this transmitted power to reach the target transmitted power. However, it should be noted that the transmitted power is often linked to other parameters and the configuration of only this variable is generally not sufficient.

3. Modifying the distance d: the shorter the distance between the two nodes, the higher the received power. The distance is a key parameter in the formula because this variable is raised to the power 2. This parameter can be mainly configured by the user by moving the communicating nodes. However, the managing system can also use robotic self-moving techniques to adjust automatically the distance between the nodes.

In a mesh network, with several nodes, the problem of configuration is more complex because the fact of adding a connection is often correlated with removing another connection. For example, let's suppose that the antenna gain is modified: the node A is connected to the node C but not to the node B. In order to create a connection between the node A and the node B, the system configures the gain of the transmitter antenna of the node A. But in a mesh network, a key concept appears: the antenna beam orientation (or rotation of the antenna beam). To benefit from the increasing of the gain, the node A must orientate its antenna beam to the node B, concentrating the signal to the node B. But because of this directivity and this orientation, the signal strength is lower at other nodes, for instance node C.

Document GB 24 458 540 A discloses a method for determining a set of relay communication devices for transferring data between a source communication device and a plurality of destination communication devices, wherein the communication devices are connected to one another by communication links, with the source communication device transferring data to each destination communication device according to a number of separate paths (or routes) which is greater than a predetermined number greater than one (i.e. so that every destination device has at least two paths (or routes) for data to be received via relay node(s) from the source device). In further aspects, a communication device may detect the removal of at least one link in the network, determine, following the removal of the at least one link, for each destination device, the minimum number of separate paths (or routes) available for transferring data to the destination device, determine a new set of relay communication devices if the minimum number of separate paths (or routes) is less than or equal to the predetermined number so that the minimum specified robustness for the network is maintained.

Document FR 2 932 630 A1 discloses a method involving determining an initial list comprising consistent sets of source nodes of cardinal relative to a destination node. A modified list comprising the sets is determined if the nodes are among the initial list. A consistent set of source nodes is selected among the modified list if the modified list is not empty. Network coding according to the document implies a sub-network comprising a consistent set of selected source codes, destination codes and relay nodes. The source nodes of the consistent set of selected nodes send a packet to destination nodes via the relay nodes.

The prior art is focused on the configuration of a point to point transmission between two nodes. However, the document US2002/090966 entitled "Transmit power control of wireless communication devices" describes a system for controlling transmitted power of a wireless communication device in a wireless network. The system tries to ensure that all the wireless devices are connected to one centralized device. If it is not the case, the wireless devices adjust their transmitted power. This system is not efficient since it is limited to centralized network. More precisely, each connection is independently configured without taking into account other connections.

The present invention aims to mitigate these drawbacks. To that end, according to a first aspect, the present invention relates to a method according to claim 1.

Thanks to these provisions, the mesh network is optimized through improving the connectivity, without adding new relay nodes or without randomly reconfiguring the mesh network, since the necessary connections to be added to reach the target capacity are identified.

The present invention thus makes it possible to design the optimal communication network having the target capacity R, i.e. to design the communication network comprising the minimal number of nodes and minimal number of connections. It should be noticed that over-dimensioning a network leads to a waste of energy. If a connection failure between two nodes does not impact the target capacity, the managing system or/and the user may configure the system in order to delete this useless connection.

According to particular features, the first condition is fulfilled if the number N of relay nodes minus the number K of source nodes is superior or equal to R; and wherein, if the first condition is not fulfilled, the step of reconfiguring comprises a step of activating at least N - K - R relay nodes not already activated.

Thanks to these provisions, the optimal network is built by avoiding useless relay nodes, using less resources and saving energy.

According to particular features, the second condition is fulfilled if each non-empty set $\Sigma$ of the plurality of K source nodes is connected to at least R + card($\Sigma$) relay nodes among the N relay nodes, where card($\Sigma$) is the cardinal of $\Sigma$; and wherein, if the second condition is not fulfilled, the method further comprises a step of determining a set $\Sigma'$ of the plurality of K source nodes that is not connected to at least R + card($\Sigma$') relay nodes among the N relay nodes;

and wherein the step of reconfiguring comprises a step of adding at least one connection between at least one source node of said determined set $\Sigma$' and a relay node that is not already connected to any source node of said determined set $\Sigma$'.

According to particular features, the third condition is fulfilled if R is lower than M - N + card($SR_{min}$), where:

- $SR_{min}$ is the smallest set of relay nodes connected to a destination node; and
- M is the minimal difference, for all possible sets of source nodes, between the cardinal of the set of relay nodes connected to the set of source nodes and the cardinal of said set of source nodes;

wherein, if the third condition is not fulfilled, the method further comprises a step of identifying each destination node having the minimum number of connections with the relay nodes;

and wherein the step of reconfiguring comprises a step of adding, for each of the identified destination nodes, at least one connection between said destination nodes and any one of the relay nodes that is not already connected to said destination node.

According to particular features, the method further comprises, if it is determined that the communication network has a network error correction capacity at least equal to R, a second step of reconfiguring the communication network comprising:

- a step of selecting N - R - K relay nodes among the N relay nodes of said network and
- if the communication network without the N - R - K selected relay nodes has a network error correction capacity at least equal to R, a step of deactivating the N - R - K selected relay nodes.

Thanks to these provisions, an optimal algorithm is provided to determine the useless relay nodes, which saves resources, and particularly central processing unit process time.

According to particular features, the method further comprises, if it is determined that the communication network has a network error correction capacity at least equal to R, a third step of configuring the communication network comprising:

- a step of determining a set of relay nodes, called $K_{rr}$, having connectivity number $rr_i$ equal to $rr_{max}$, wherein $rr_{max}$ is the maximum value of the connectivity numbers $rr_i$.
- a step of deactivating M - R + N - Card($SR_{min}$) relay nodes of the set $K_{rr}$. wherein M is the minimal difference, for all possible sub-sets of source nodes, between

- the cardinal of the set of relay nodes connected to the sub-set of source nodes and
- the cardinal of said sub-set of source nodes.

Thanks to these provisions, only the useful nodes are used.

According to particular features, the method further comprises, if it is determined that the communication network has a network error correction capacity at least equal to R, a fourth step of configuring the communication network comprising:

- a step of selecting at least one connection between the source nodes and the relay nodes,
- a step of performing, on the communication network without the selected connection:

  - a step of determining whether the number of relay nodes is such that each non-empty subset of size S of the set of source nodes is connected, without the selected connection, to at least S+R relay nodes among the relay nodes and
  - a step of determining whether R is lower than M - N + card($SR_{min}$), for a destination node having the minimum number of connections with the relay nodes,
  - if the result of the step of performing is positive,

    - a step of determining that each selected connection is useless,
    - for each destination node, selecting (card($SR_i$) - card($SR_{min}$)) connections, wherein $SR_i$ is the sub-set of relay nodes connected to the destination node $D_i$ and $SR_{min}$ is the minimal sub-set.
    - a step of deactivating the selected connections.

Thanks to these provisions:

- less processing resource is used: the relay nodes or the destination nodes no longer manage the messages received from these connections. For the relay nodes (respectively, the destination nodes), the combination of the packets (respectively, the decoding) is faster because the operations involve fewer packets
- less energy is used: the transmission power can be decreased for the selected transmissions and
- more robustness is obtained: the antenna gain and the orientation must be modified to decrease the quality of the selected connections to the advantage of the other connections.

According to particular features, the selection step is based on a connection quality value and comprises:

- a step of assessing the quality of each connection between two network nodes and
- a step of selecting the connections which have the lowest quality value.

According to a second aspect, the present invention relates to a device according to claim 9.

According to a third aspect, the present invention relates to a computer program loadable into a computer system, said program containing instructions enabling the implementation of the method of the present invention, as succinctly set forth above, when that program is loaded and executed by a computer system.

According to a fourth aspect, the present invention relates to an information carrier readable by a computer or a microprocessor, removable or not, storing instructions of a computer program, that enables the implementation of the method of the present invention as succinctly set forth above.

As the advantages, objectives and characteristics of this device, of this computer program and of this information carrier are similar to those of the method of the invention, as succinctly set forth above, they are not repeated here.

Other advantages, objectives and features of the present invention will emerge from the following description, given, with an explanatory purpose that is in no way limiting, with respect to the accompanying drawings in which:

- Figure 1 illustrates a meshed network including source, relay and destination nodes and their connections,
- Figure 2 illustrates an architecture of a network node's communication module,
- Figure 3 illustrates an exemplary structure of a TDMA transmission sequence and an exemplary structure of a control Packet indicating new Network Coding Coefficients,
- Figure 4 illustrates an exemplary flowchart for checking the existence of a distributed error correction code,
- Figure 5 illustrates an exemplary flowchart for checking if the set of source nodes is sufficiently connected to the set of the relay nodes,
- Figure 6 illustrates an exemplary flowchart for checking if the set of destination nodes is sufficiently connected to the set of the relay nodes.,
- Figure 7 illustrates an exemplary flowchart for deactivating relay nodes that are not necessary for the construction of the distributed error correction code,
- Figure 8 illustrates an exemplary flowchart for deactivating connections that are not necessary for the construction of the distributed error correction code,
- Figure 9 illustrates an exemplary flowchart for building a distributed error correction code,
- Figure 10 illustrates an exemplary flowchart implemented by a relay node for updating coefficients and for receiving, encoding and sending packets and
- Figure 11 illustrates an exemplary flowchart implemented by a destination node for updating coefficients and for receiving and decoding packets.

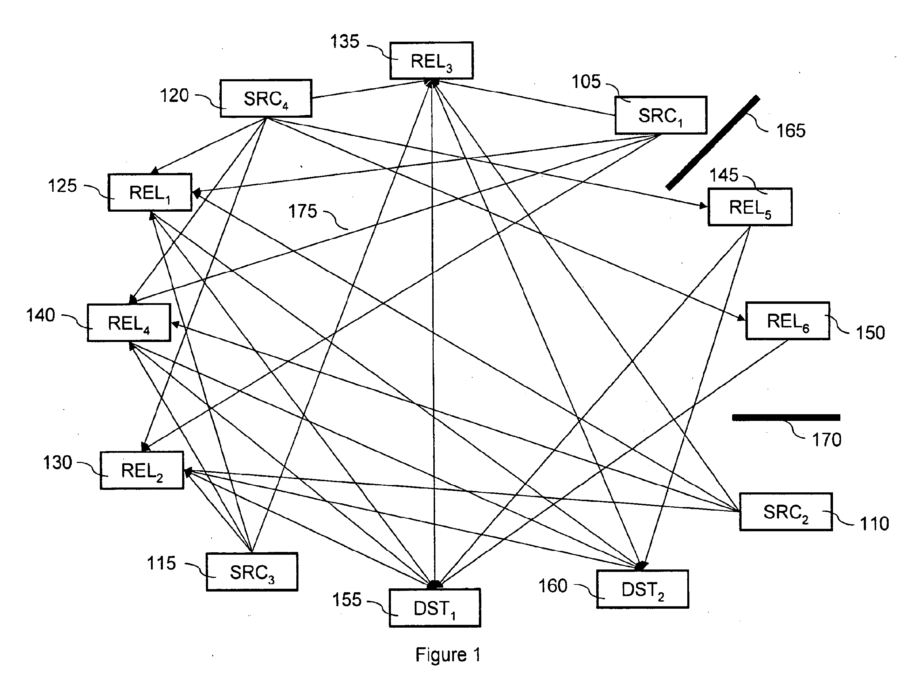

The Figure 1 represents an example of a meshed wireless or wired network applying linear network coding. We consider that each of the data packets transmitted within this network is composed of a predetermined, fixed number L of symbols issued from a predetermined Galois Field GF(q), q being the number of elements of said Galois Field. Hence said packets can be considered as vectors of the linear space $GF(q)^L$. It is well known that the number of elements of a Galois Field is always a power of a prime number p (called the characteristic of the Galois Field), $q = p^m$ for some positive integer m. Due to the binary nature of the data transmitted in digital networks, said prime number p is usually chosen to be equal to 2. Furthermore, as the devices attached to the networks in question usually structure the binary information they process in the form of bytes composed of 8 bits, m is advantageously chosen to be equal to 8. Hence $q = 2^8 = 256$ and the aforementioned data symbols are identical to bytes. However, it has to be understood that the scope of present invention is not restricted to said choices of values for p and m. Introducing the structure of a Galois Field onto the data symbols composing data packets has the advantage of enabling the arithmetic operations of addition, subtraction, multiplication, division (except by "0") and of fulfilling well-known axioms of commutativity, associativity, inversibility and distributivity; said operations being useful for the implementation of network coding as well as error correction coding.

Figure 1 shows:

- four source nodes 105, 110, 115 and 120, also respectively called $SRC_1$, $SRC_2$, $SRC_3$, $SRC_4$, each of them emitting a data packet respectively called $s_1$, $s_2$, $s_3$ and $s_4$ to all relay nodes connected to it;
- six relay nodes 125, 130, 135, 140, 145 and 150, also respectively called $REL_1$, $REL_2$, $REL_3$, $REL_4$, $REL_5$, $REL_6$;
- two destination nodes 155 and 160 and
- two fixed obstacles : 165 and 170.

Two nodes are either connected or not connected.

When two nodes are connected, the transmission is represented by an arrow between said nodes, as, for example, arrow 175 between nodes 105 and 140. The directivity of the arrow is merely for convenience of representation since, in the preferred embodiment, the connections are two-way connections. This model allows indication of the flow directivity of the data (source nodes to relay nodes and relay nodes to destination nodes). How to determine if two nodes are connected or not is explained with reference to step 315.

Two nodes cannot be connected if there is an obstacle between them. For example, obstacle 165 prevents any connection between node 105 and each of nodes 145 and 150. Obstacle 170 prevents any connection between nodes 110 and 150.

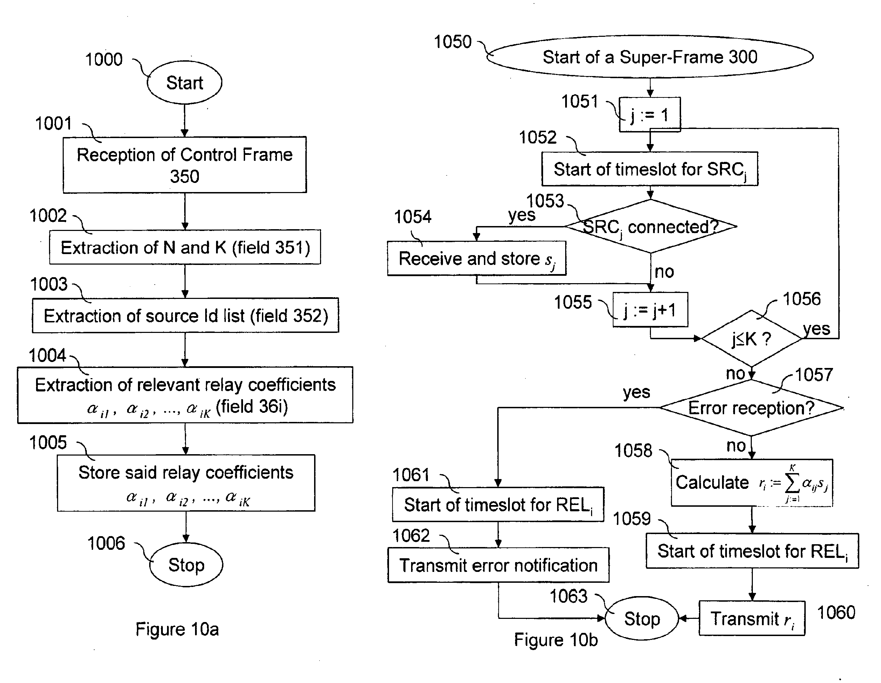

Each relay node sends a data packet, respectively called $r_1$, $r_2$, $r_3$, $r_4$, $r_5$ and $r_6$, determined from the received packets $s_1$, $s_2$, $s_3$ and $s_4$ through a network coding process that will be described in more detail hereafter. Each relay node $REL_i$ (with i = 1, 2, 3, 4, 5 or 6) uses a set of four so called "network coding coefficients" denoted $\alpha_{ij}$ (with j = 1, 2, 3 or 4) that are scalars or, in other words, elements of the aforementioned Galois Field GF(q), where the coefficient $\alpha_{ij}$ is associated with the source node $SRC_j$. Whenever no connection is present from some source node $SRC_j$ to some relay node $REL_i$, the corresponding coefficient $\alpha_{ij}$ has to be zero. Each relay node $REL_i$, after reception of each of the source packets issued from the source nodes connected to it, calculates the linear combination $r_i = \sum_{j=1}^{4} \alpha_{ij} s_j$ to determine the data packet $r_i$ that said relay node will send to the destination nodes. As all data packets are vectors from GF(q)L and as addition and scalar multiplication of vectors is component-wise, the packets $r_i = (\rho_{i1}, \rho_{i2}, ..., \rho_{iL})$ for i = 1,...,6 are also vectors of the linear space GF(q)L. A more detailed description of the steps performed by relay nodes is described with reference to Figure 10.

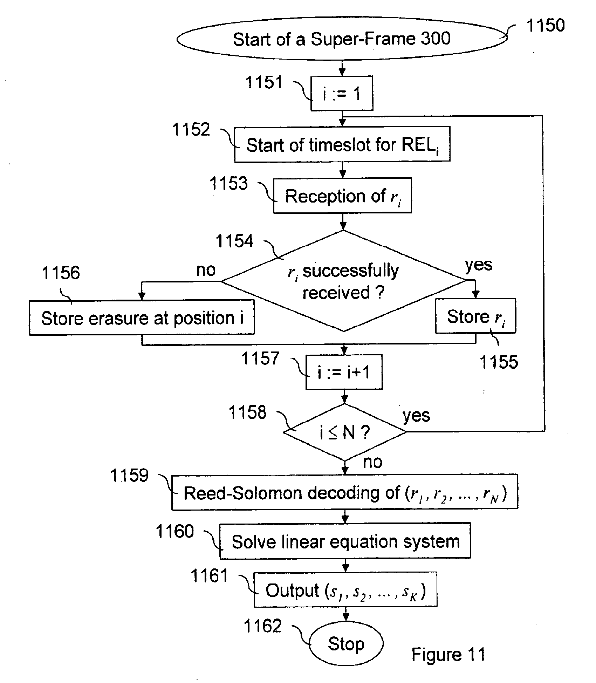

Destination node 155 is connected to the relay nodes 125, 130, 135, 140, 145 and 150 and receives the (possibly erroneous) data packets $r_1$, $r_2$, $r_3$, $r_4$, $r_5$, $r_6$. Destination node 160 is connected to the relay nodes 125, 130, 135, 140, 145 and receives the (possibly erroneous) data packets $r_1$, $r_2$, $r_3$, $r_4$, $r_5$. As described with reference to Figure 11, thanks to the choice of the network coding coefficients $\alpha_{ij}$, each of the symbol strings of the form $(\rho_{1h}, \rho_{2h}, \rho_{3h}, \rho_{4h}, \rho_{5h}, \rho_{6h})$ for h = 1, 2, ..., L obtained from said data packets forms a code word of a four-dimensional linear error correcting code, for example a (6, 4)-Reed-Solomon code. The destination node 155 corrects possible transmission errors using this error correction code and recovers the original source packets $s_1$, $s_2$, and $s_3$, $s_4$ from the corrected data of the received packets $r_1$, $r_2$, $r_3$, $r_4$, $r_5$, and $r_6$ through solving of the linear equation system describing the network coding. The destination node 160 proceeds in a similar manner, considering the symbols of the missing packet $r_6$ as erasure. The steps performed by destination nodes 155 and 160 are described with reference to Figure 11.

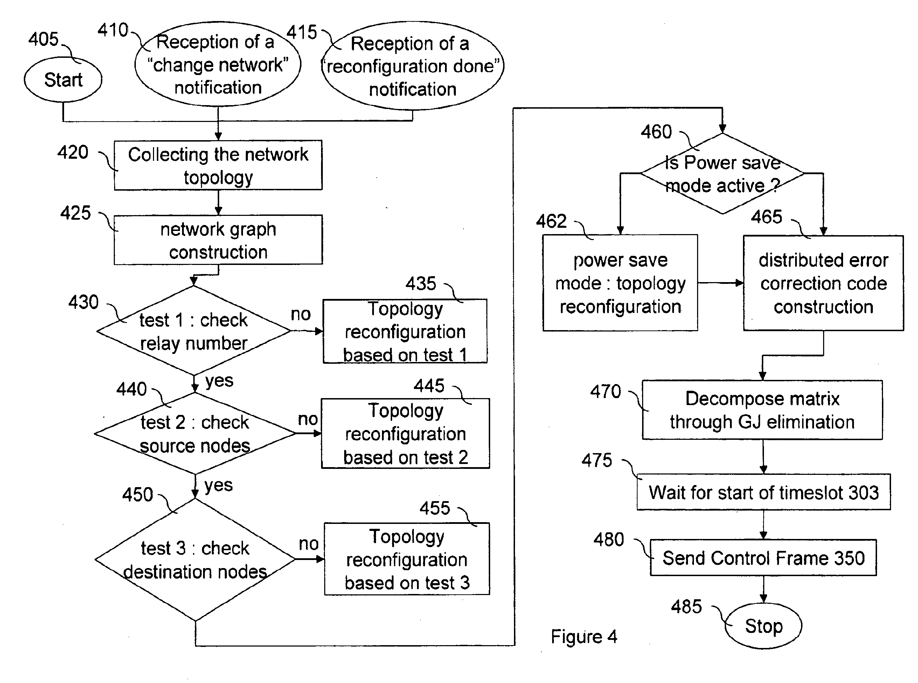

One of the network nodes must be chosen to be the centralized network node, i.e., the node which calculates the distributed error correction code, as described with reference to block 221 of Figure 4. In a preferred embodiment, that centralized network node is chosen from among the destination nodes.

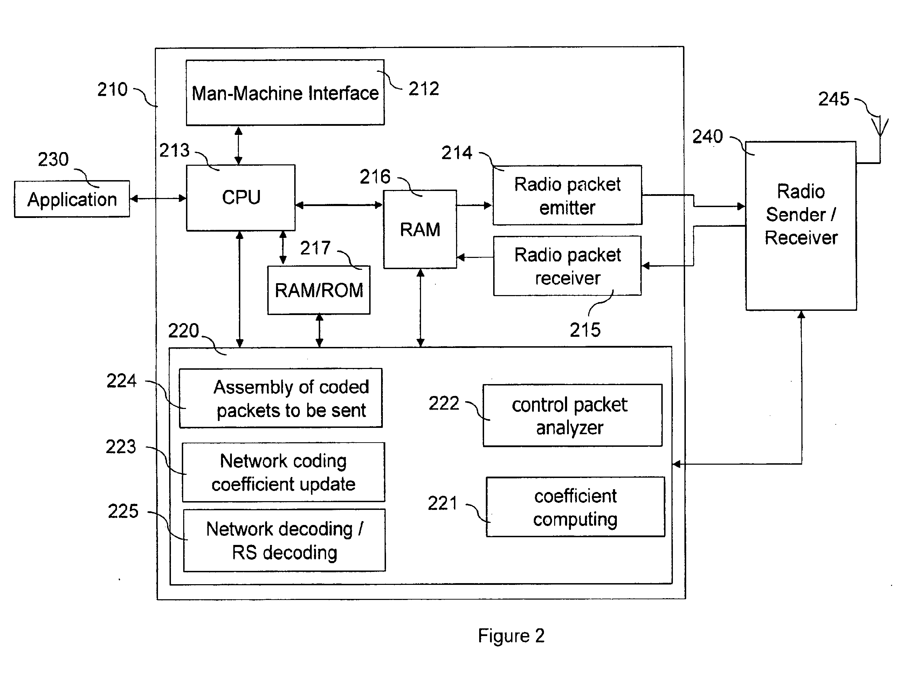

Figure 2 shows the hardware and software architecture of a communication module of a network node suitable for taking the role of a source node, of a relay node or of a destination node in a preferred embodiment of the present invention.

A CPU 213 runs a program code implementing the flowchart shown in Figures 4 to 11. A radio packet emitter 214 reads data and controls packets stored in a data memory 216 to transmit these radio packets through a radio sender/receiver unit 240 and a radio antenna 245. A radio packet receiver 215 stores data and control packets received by unit 240 in a RAM ("Random Access Memory") memory 216. The radio packet receiver 215 is also capable of detecting and signalling at least some cases of erroneous reception through analyzing the Received Signal Strength Indication (RSSI), the Signal-to-Noise Ratio (SNR) or through checking a CRC.

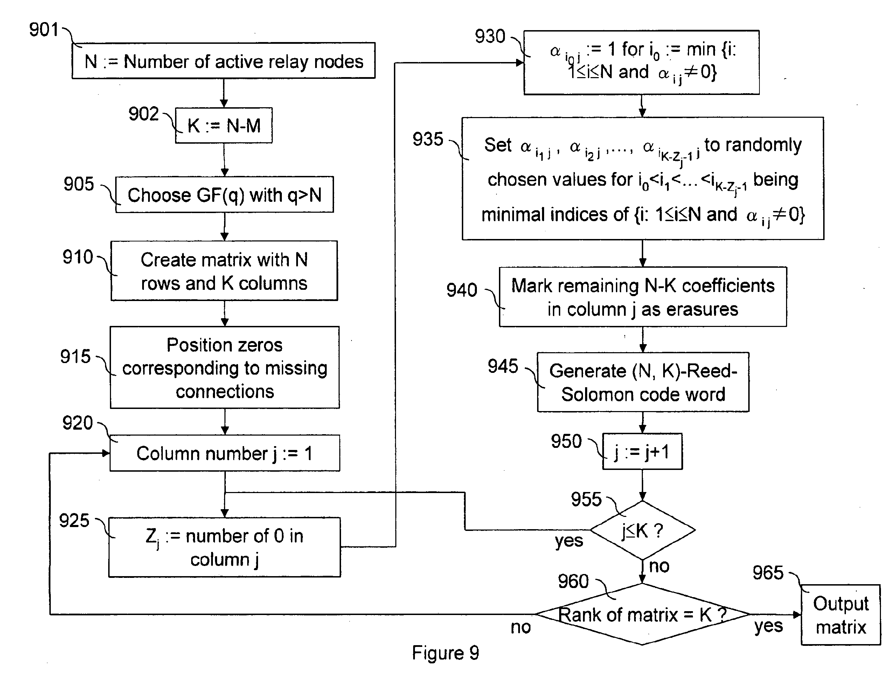

The RAM memory 216 also serves as a memory used by CPU 213. The memory 216 stores, among others, data and control packets received or to be sent and the network coding coefficients. These coefficients are either calculated when the unit 210 acts as a centralized node executing the algorithms presented with reference to Figures 4 and 9, or received when the unit 210 acts as a relay node or a destination node executing the algorithms presented with reference to Figures 10 and 11.

A RAM/ROM memory 217 contains the target correcting error capacity, R. This parameter is used by a network coding packet management unit 220 and, more particularly, by a block 221, for building a distributed code. In the worst case, if the construction of the distributed code has failed after several tests, the system can automatically decide to decrease R or requests the user to enter a new value through a man-machine interface 212.

The network coding packet management unit 220 may be implemented by software executed on CPU 213, by dedicated hardware or a combination of both. It comprises the blocks 221, 222, 223, 224 and 225.

The block 221, called "coefficient computing", is only implemented if the node acts as the centralized node. First, block 221 checks whether designing a distributed code having an error correction capacity equal to R is possible, as a function of the network topology. This test is described with reference to Figure 4. If designing such a distributed code is possible, block 221 designs the network coding coefficients as described with reference to Figure 9. If designing such a distributed code is not possible, block 221 sends:

- either a "user reconfiguration" notification containing information to reconfigure the network, to the man-machine interface 212. The configuration information contains the connections to add or to remove in the network. As a result, the user may know the nodes that need to be moved;

- or a "system reconfiguration" notification containing configuration data for reconfiguring the network, to the radio sender/receiver unit 240. This configuration data contains the connections that need to be added or removed in the network. The radio sender/receiver unit 240 may then decide either to increase its transmission power or/and to increase its antenna gain or/and to rotate its antenna 245 beam, as explained above. For instance, the lobe of the antenna can be modified to create the necessary connection indicated by the configuration data without removing other connections in the network. The algorithms that perform these operations are known by the person skilled in the art. After a reconfiguration of its radio communication parameters, the radio sender/receiver unit 240 sends new connectivity data to block 221.

In this case, after the reconfiguration, the block 240 sends a "reconfiguration done" notification to the block 221. If after several tests, the system cannot automatically modify the desired connectivity so as to have an error correction capacity equal to R (indicated in the "system notification"), the block 221 sends a "user reconfiguration" notification to the user so that the user may perform the proposed reconfiguration.

A control packets analyzer 222 allows distinguishing between received data and control packets. Moreover, the control packet analyzer 222 parses the control packets and carries out the appropriate processing steps in response as, for example, in the algorithm described with reference to Figure 10 for a relay node. A network coding coefficient update manager 223 allows managing the update of the network coding coefficients to be used by the relay node as described with reference to Figure 10a, or by the destination node as described with reference to Figure 11.

An assembly module for coded packets 224 is used by the relay node to generate the packets to be sent, according to the algorithm described with reference to Figure 10b. A decoding module 225 carries out Reed-Solomon and Network decoding in the destination node, as described with reference to Figure 11. The original source data recovered by this module are then forwarded to an application 230 for further processing. In a source node, the data packets to be sent originate from the application 230.

The Man-machine interface 212 is used to indicate to the user if a reconfiguration is necessary or not. The connections to be added or removed are displayed, for instance on a screen (connections indicated in the "user configuration data"). Once the reconfiguration is completed, the user indicates this through the man-machine interface 212. So, the man-machine interface 212 sends a "reconfiguration done" notification to the block 221 to launch it again.

As will be seen in the following description, in the described embodiment, eight types of notification are use: the "error" notification, the "change network" notification, the "user reconfiguration" notification, the "system reconfiguration" notification, the "reconfiguration done" notification, the "wake-up" notification, the "power save reconfiguration" notification and the "user power save reconfiguration" notification.

While the present invention applies both to wired and wireless networks, the preferred embodiment is a wireless network wherein all participating nodes share the common medium by the way of TDMA ("Time Division Multiple Access"). However, this description is not meant to be limitative and the invention could also be applied to a wireless network sharing the medium, for example by way of FDMA ("Frequency Division Multiple Access") or CDMA ("Code Division Multiple Access"), or to a wired network where the medium does not need to be shared (since all nodes transmit their data using separate wires), or even to an hybrid network, where both wired and wireless transmission are used.

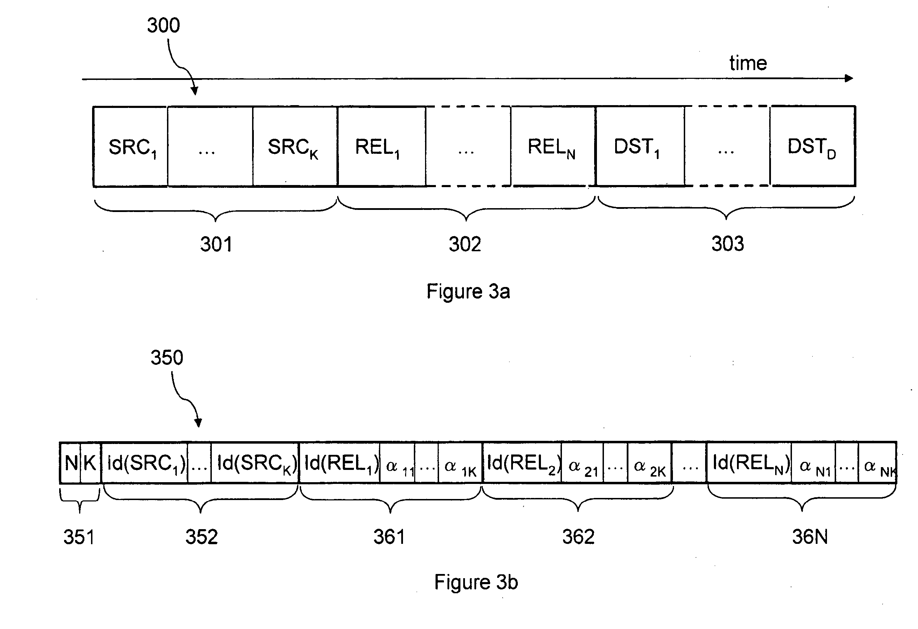

Time division multiple access (TDMA) is a channel access method for shared medium networks wherein several network nodes share the same frequency channel by splitting time into different time slots. Figure 3a shows a transmission sequence 300 composed of N+K+D time slots of equal, predetermined duration. Such a sequence is also referred to as a "Super-Frame". Here K is the number of source nodes (K = 4 in the example shown in Figure 1), N is the number of relay nodes (N = 6 in said example), and D is the number of destination nodes (D = 2 in said example). As shown on Figure 3a, the sequence 300 is divided into:

- a sub-sequence 301, sub-divided into K time slots, each time slot allotted to exactly one source node;
- a sub-sequence 302, sub-divided into N time slots, each time slot allotted to exactly one relay node and
- a sub-sequence 303, sub-divided into D time slots, each time slot allotted to exactly one destination node and allowing the latter to transmit control packets.

After the end of a super-frame, another one starts. The predetermined duration of a time slot and the numbers N, K and D are supposed to be known to all network nodes. Furthermore each network node is capable of detecting the start of a new super-frame, the start of a new time slot dedicated to any other network node that is connected to it and the start of the timeslot allotted to itself for transmission.

It can be seen that each relay node can receive the source data packets from the respective connected source nodes during sub-sequence 301 of a given super-frame 300, perform network coding according to the invention and transmit its encoded packet during its allotted time slot within the sub-sequence 302 of the same super-frame. The destination nodes receive, store and process all encoded packets that they can receive from a given super-frame to recover the source packets transmitted during the same super-frame. Synchronization is easily achieved and mixing of encoded data frames belonging to different super-frames, which would be disastrous for recovering the original source data, can easily be avoided.

As already stated in the description of Figure 1, we assume that all data packets that are subjected to network coding have a payload of fixed predetermined length L and a header that might not be subjected to network coding. Additionally, all nodes are capable of transmitting and receiving control packets conveying different kinds of network management data rather than payload data. Such control packets, which can easily be distinguished from data packets, for example by having a different header, are not subjected to network coding and may have a different length to data packets, typically a much shorter one. A control packet may be transmitted in the same time slot as a data packet, before or after said data packet, or instead of a data packet. Control packets will typically occupy only a very small part of the total bandwidth available in the network. As a consequence, classical schemes of coping with errors or loss, such as using acknowledgement messages and retransmission of data or flooding, can be employed without impacting the (possibly high-bandwidth) payload data transmission. In a particular embodiment of the present invention, the timeslots allotted to nodes that are known to only transmit control packets (such as destination nodes and, possibly, inactive relay nodes) are significantly shorter than the timeslots allotted to nodes transmitting data packets of length L.

Figure 3b shows an example of a control packet 350 indicating network coding coefficients that are determined by one centralized network node. Such a packet, after having been issued by said centralized node, is then propagated in the whole network through some suitable broadcasting method, as spanning tree broadcasting or flooding, so as to reach all network nodes, enabling them to take into account the new coefficients in a synchronized manner at the start of a new super-frame. The packet 350 comprises:

- a field 351 indicating the number of active relay nodes N and the number of source nodes K;
- a field 352 indicating the unique identifiers of the K source nodes SRC1, ..., SRCk and
- N fields 361, 362, ..., 36N, the field 36i (for i = 1, 2, ..., N) being composed of the unique identifier of the active relay node $REL_i$, followed by the list of K network coding coefficients $\alpha_{i1}$, $\alpha_{i2}$, ..., $\alpha_{iK}$ extracted from the $i^{th}$ row of the network coding matrix.

Figure 4 describes an algorithm performed by block 221 in the centralized node. The main steps of this algorithm are:

- collecting the topology of the network,
- testing whether the topology allows construction of a distributed error correction code having a capacity equal to R and
- if yes, constructing the distributed error correction code, and if not, sending a "system reconfiguration" notification to the system or a "user reconfiguration" notification to the user.

This algorithm is launched by one of the following events:

- initialization of the system (during a step 405),
- detection of a relevant change in the network topology (during a step 410): the block 215 which detects a new failure or a new restoration of a connection, sends a "change network" notification indicating this change to the centralized node or
- reception of a "reconfiguration done" notification from the radio sender/receiver block 240 or the man machine Interface 212 (during a step 415).

During a step 420 the network topology is searched, including:

- the number K of source nodes,
- the number N of relay nodes,
- the number D of destination nodes and
- data connectivity measured for each transmission between two nodes: for instance, the Signal-to-Noise Ratio (SNR) or the Radio Signal Strength Indication (RSSI). Protocols gathering such information are well known by the man skilled in the art and will not be described here (for example, user configuration or flooding techniques).

During a step 425, the information collected is used to create the network graph G=(V,E) defined by:

- each communicating entity is represented by a node. V is the set of nodes,
- each connection between two communicating entities is represented by a link between two nodes. There is a connection between two nodes if the connectivity value between said nodes is superior to a predetermined threshold value that depends on the type of radio communication used). $E \subseteq V \times V$ is the set of connections, or links.

Next, during a step 430, it is determined whether the error correction capacity R is achievable or not, by determining whether there are enough relay nodes in the network, as follows. If N minus K is superior or equal to R, then the result is positive and a step 440 is proceeded to. Otherwise, a step 435 is proceeded to.

The lack of relay nodes requires a reconfiguration of the network, performed during step 435. Two cases are possible:

- if the system detects inactive relay nodes, the system sends a "wake-up" notification to the inactive relay nodes and proceeds to step 410 through the reception of "change network" notification or

- if the system detects no inactive relay nodes, the system sends a "user configuration" notification indicating the number of relay nodes that need to be activated. The system waits for the modifications by the user and proceeds to step 415 at the reception of "change network" notification.

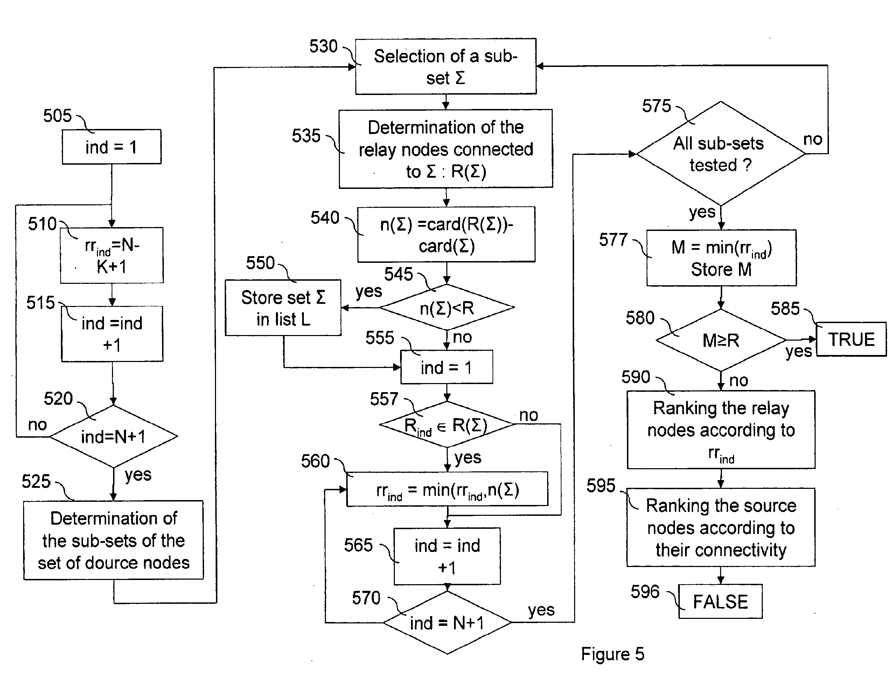

During a step 440, it is determined whether the set of source nodes is sufficiently connected to the set of relay nodes, i.e. it is checked whether the communication network can have a network error correction capacity at least equal to R. This test is described with reference to Figure 5. If the result is positive, a step 450 is proceeded to. Otherwise, a step 445 is proceeded to.

During step 445, either a "system reconfiguration" notification is sent to the radio sender/receiver unit 240 (preferred mode), or a "user reconfiguration" notification is sent to the man-machine interface 212. This reconfiguration notification contains three items of information:

- a minimum number of connections to add. It is equal to R - M, M being defined with reference to Figure 5,
- a sorted list of source nodes determined during step 595 and
- a sorted list of relay nodes determined during step 590.

With this "user reconfiguration" notification displayed by the man-machine interface 212, the user is guided to reconfigure the network by trying to create R - M connections between the best ranked source nodes and the best ranked relay nodes (ascending ranking). For instance, the user can move these nodes or can remove obstacles between these nodes. Similarly, on reception of a "system reconfiguration" notification, the radio sender/receiver unit 240 tries to create connections between the best ranked source nodes and the best ranked relay nodes, for example by increasing the transmitted power or the antenna gain or by providing a new antenna beam orientation. An example of an algorithm is given below for the creation of one connection.

a) r is initialized to 2.
b) as long as r is less than K+N, where K is the number of source nodes and "N" is the number of relay nodes, perform steps c) to e) as follows:
c) i is initialized to 1,
d) try to connect the source node ranked to the $i^{th}$ position and the relay node ranked to the $(r-i)^{th}$ position,
e) If the result of the connection test of step d) is positive, the connection is created and the algorithm ends, otherwise if i is strictly less than K and r minus i is strictly greater than 2, increment i by one and proceed to step d) again.
f) increment "r" by one and proceed to step b) again

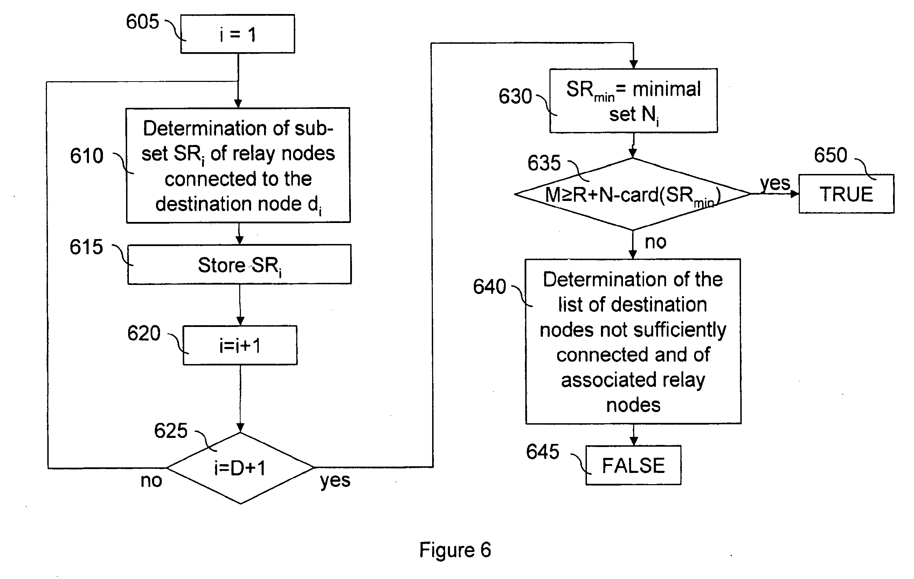

During step 450, it is determined whether the set of destination nodes is sufficiently connected to the set of the relay nodes, i.e. it is checked whether the communication network has a network error correction capacity at least equal to R. This test is described with reference to Figure 6. If yes, a step 460 is proceeded to. Otherwise, a step 455 is proceeded to. During step 455, either a "system reconfiguration" notification is sent to the radio sender/receiver unit 240 (preferred mode), or a "user reconfiguration" notification is sent to the man-machine interface 212. This "reconfiguration" notification contains the following items of information:

- identification data of the destination nodes $d_i$ that are insufficiently connected,
- for each insufficiently connected destination node $d_i$, the number of missing connections, equal to R+N-card($SR_i$)-M and
- for each insufficiently connected destination node $d_i$, the relay nodes $K'_i$ not connected to the destination node $d_i$.

With a "user reconfiguration" notification displayed by the man-machine interface 212, the user is guided to reconfigure the network by trying to create new connections between the insufficiently connected destination nodes $d_i$ and the associated relay nodes $K'_i$, by moving these nodes or removing obstacles. Similarly, at the reception of a "system reconfiguration" notification, the radio sender/receiver unit 240 tries to create these connections, by increasing the transmitted power or increasing antenna gain or by providing a new antenna beam orientation.

During step 460, it is determined whether the "power save" mode is active or not. The "power save" mode is activated either by the user or by the system at the initialization. If the "power save" mode is active, a step 462 is proceeded to. Otherwise, a step 465 is proceeded to.

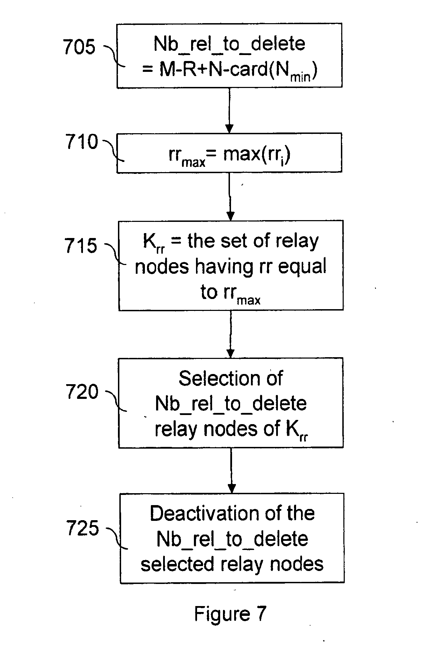

Step 462 allows optimization of the communication network by detecting the connections and the nodes which have no impact on the target error correction capacity. These detected nodes and connections will not be taken into account in the construction of the distributed code during step 465. The steps performed during step 462 are described with reference to Figure 7. Next step is 465.

During step 465, N is the number of active relay nodes and a distributed error correction code having a capacity equal to R is designed as described with reference to Figure 9. Let A be the N-by-K network coding matrix A=($\alpha_{ij}$). During a step 470, this matrix is decomposed into a product A=B*C$^{-1}$ (or A*C=B), wherein B is an N-by-K matrix describing the systematic encoder for an (N, K)-Reed-Solomon code and C is an invertible K-by-K matrix. This decomposition is advantageously achieved by a procedure known to those skilled in linear algebra as "Gauss-Jordan elimination", carried out column-wise on the matrix A augmented with K supplementary lines containing the K-by-K identity matrix. In other words, C is the inverse matrix of the K-by-K sub-matrix composed of the upper K rows of matrix A. Matrix C is stored by the destination node DST for the purpose of simple, optimized execution of a step 1160 (see Figure 11).

During a step 475, the centralised destination node executing the present algorithm waits for the start of the timeslot allotted to it within the sub-sequence 303 of the super-frame 300. When this timeslot starts, during a step 480, a control frame 350 is transmitted. This control frame comprises the field 351 indicating N and K, the field 352 indicating the list of all source node unique identifiers and the fields 361, 362, ..., 36N indicating each one a unique identifier of a relay node, together with the list of network coding coefficients $\alpha_{ij}$ to be applied by said relay node. The process then stops during a step 485. The remaining destination nodes receive said control frame 350, extract the network coding coefficients ($\alpha_{ij}$) and execute the matrix decomposition step identical to step 470 described above, to store the matrix C.

Figure 5 describes the test for determining whether the set of source nodes is sufficiently connected to the set of relay nodes, i.e. it is checked whether the communication network can have a network error correction capacity at least equal to R. The main result is a binary output. But if said test is negative, the test also delivers additional information, useful for the reconfiguration of the network. Additional information comprises:

- a sorted list of source nodes indicating the source nodes insufficiently connected to the set of relay nodes, and indicating a ranking of these source nodes in order to identify the source nodes to firstly connect and
- a sorted list of relay nodes indicating the relay nodes the least connected to the set of source nodes and indicating a ranking of these relay nodes in order to identify the relay nodes to firstly connect to source nodes.

During steps 505 through 520, a variable $rr_{ind}$, is initialized at the value N-K+1 for each relay node:

- during step 505, the variable ind is initialized at "1". This variable represents the identifier of the currently processed relay node,
- during step 510 the variable $rr_{ind}$ is initialized at the value N-K+1,
- during step 515, the variable ind is incremented by "1" and
- during step 520, it is determined whether the value of the variable ind is equal to N+1, i.e., if all the relay nodes have been processed. If yes, a step 525 is proceeded to. Otherwise, step 510 is proceeded to. This variable $rr_{ind}$ represents hereinafter the connexion level between a relay node $R_{ind}$ and the set of source nodes. This value depends on the number of point to point connections between $R_{ind}$ and each sub-set of the set of source nodes.

During a step 525 all the non-empty sub-sets of the set of source nodes are enumerated. It should be noticed that the number of sub-sets is equal to $2^{card(S)}$ - 1. During a step 530, one of the not yet tested sub-sets is selected and represented by the variable $\Sigma$. During a step 535, the number of relay nodes connected to $\Sigma$ is determined and represented by the set $R(\Sigma)$. During a step 540 the difference between the cardinal of $R(\Sigma)$ and $\Sigma$ is computed and represented by the variable $n(\Sigma)$. Next, during a step 545, it is determined whether $n(\Sigma)$ is less than to R.

If yes, the sub-set $\Sigma$ is not sufficiently connected and, during a step 550, the set $\Sigma$ is stored in the list L. The source nodes contained in the list L are indicated in the final information given by this algorithm (see step 595). At the end of step 550, it is known that the result of the test of step 440 is negative, i.e., the set of source nodes is not sufficiently connected to the set of the relay nodes. However, the algorithm shown in Figure 5 goes on to provide additional information on other insufficiently connected source nodes and to provide a ranking of the relay nodes according their connections with the set of the source nodes.

If the result of step 545 is negative, the sub-set $\Sigma$ is sufficiently connected and a step 555 is proceeded to.

Steps 555 through 570 serve to update the values of the variable $rr_{ind}$ according the currently processed sub-set $\Sigma$. During step 555, the variable ind is initialized at the value "1". This variable represents the identifier of the currently processed relay node. During step 557, it is checked whether $REL_{ind}$ is an element of the set $R(\Sigma)$. If yes, step 560 is proceeded to. Otherwise, step 565 is proceeded to. During step 560 the variable $rr_{ind}$ is set to the value $min(rr_{ind}, n(\Sigma))$. During a step 565, the variable ind is incremented by "1". During step 570, it is determined whether the value of the variable ind is equal to N+1, i.e., if all the relay nodes have been managed. If yes, a step 575 is proceeded to. Otherwise, step 560 is proceeded to.

During step 575, it is determined whether all the sub-sets of the set of source nodes have been processed. If yes, a step 577 is proceeded to. Otherwise, step 530 is proceeded to. During step 577, the minimum value of the variable ($rr_{ind}$), ind=1..N is determined and represented by the variable M. M is stored. Next, during a step 580, it is determined whether M is superior or equal to R. If yes, the result of the test of step 440 is positive and, during a step 585 this positive result is notified. If not, additional information is computed during a step 590, in which the relay nodes $R_{ind}$ having their variable $rr_{ind}$ more than M are selected. The selected relay nodes are sorted according to the values of the variable $rr_{ind}$, in a decreasing order.

During a step 595, the source nodes are sorted according to their connectivity. For each source node $k_i$ contained in at least one sub-set $\Sigma_i$ of L, a variable $g_i$ is computed as $g_i := \sum_{l=1}^{card(L)} I_{\{k_i \in \Sigma_l\}}$ with $I_{\{N_i \in \Sigma_l\}}$ equal to the value "1" if $N_i \in \Sigma_l$, otherwise equal to the value "0". The source nodes are sorted according to the value of their variable $g_i$ in an ascending order.

Once step 595 has been performed, a step 596 is performed indicating the failure of the test of step 440.

Figure 6 describes the determination as to whether the set of destination nodes is sufficiently connected to the set of relay nodes, i.e we check if the communication network can have a network error correction capacity at least equal to R.

During a step 605, the variable i is initialized at the value "1 ". This variable i represents the currently processed destination node $d_i$. During a step 610, the relay nodes connected to the destination node $d_i$ are determined and represented by the set $SR_i$.

During a step 615, $SR_i$ is stored. During a step 620, the variable i is incremented by "1 ". During a step 625, it is determined whether the value of the variable i is equal to D+1. In other words, it is determined whether all the destination nodes have been processed. If the test of step 625 is negative, the algorithm proceeds to step 610. Otherwise, step 630 is proceeded to.

During a step 630 the minimum set of SRi is determined and represented by the set $SR_{min}$.

During a step 635, it is determined whether all the destination nodes are sufficiently connected or not. The condition of the test 635 is the following: $M \geq R + N - card(SR_{min})$, M being computed during step 577. If yes, during a step 650 the present algorithm is stopped and the success of the test of step 635 is indicated. Otherwise, during a step 640, the insufficiently connected destination nodes are searched, i.e. the destination nodes $d_i$ that do not fulfil the following condition: $M \geq R + N - card(SR_i)$. For each destination node $d_i$, the following information is determined:

- the number of missing links for $d_i$, this number being equal to $R + N - card(SR_i) - M$ and
- the relay nodes not connected to the destination node $d_i$, i.e. the relay nodes contained in the set N but not contained in the set $SR_i$.

Once step 640 has been performed, step 645 stops the present algorithm by indicating the failure of the test.

A first implementation of an algorithm for deactivating relay nodes that are not necessary for the construction of the distributed error correction code, comprises the following steps:

- if N - R - K is positive, randomly selecting N - R - K relay nodes among the N relay nodes of the network,
- testing whether the communication network without the N - R - K selected relay nodes, called the "new network topology", has a network error correction capacity at least equal to R, by launching again the algorithm described with reference to figure 4, the new network topology being used at step 420,
- if the result of test 450 is positive, deactivating the N - R - K selected relay nodes in a similar way as at step 725.

Figure 7 describes a second implementation of an algorithm for deactivating relay nodes that are not necessary for the construction of the distributed error correction code. During a step 705, the number of relay nodes which can be deactivated is computed and represented by the variable "Nb_rel_to_delete". The value of this variable is set to $M-R+N-card(SR_{min})$. During a step 710, the maximum of the values of $rr_i$ computed during step 560 (see Figure 5) is determined and represented by the variable $rr_{max}$. During a step 715, the set of relay nodes having a value of $rr_i$ equal to $rr_{max}$ is determined and represented by $K_{rr}$.

During a step 720, Nb_rel_to_delete relay nodes of $K_{rr}$ are selected. During a step 725, these selected relay nodes are deactivated. Next, these relay nodes will not be taken into account in the construction of the coding matrix (during step 465). The algorithm either sends a "user reconfiguration" notification indicating that these relay nodes are not necessary so that the user may deactivate these nodes or the system automatically deactivates these relay nodes: a "power save reconfiguration" notification is sent to the selected relay nodes. In this case, the value of N is modified.

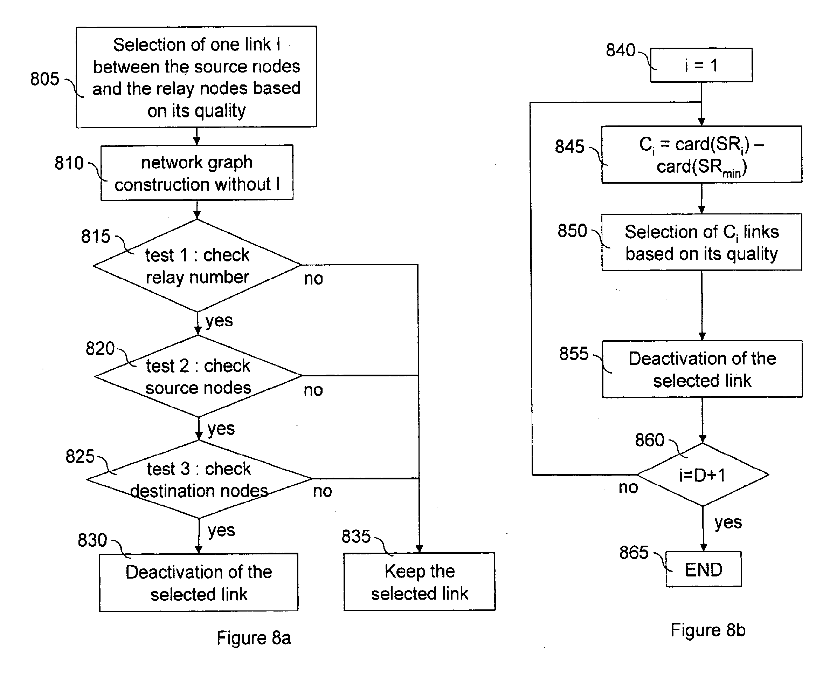

It should be noticed that the fact of deactivating a node corresponds to deactivating the input and output connections of this node. A step 830 (see Figure 8), corresponding to the reconfiguration step, is also valid for the node deactivation.

Figure 8 describes an algorithm for deactivating connections that are not necessary for the construction of the distributed error correction code. The algorithm is divided in two parts, independently managed:

- the first part analyzes the links (or connections) between the source nodes and the relay nodes and
- the second part analyzes the links (or connections) between the relay nodes and the destination nodes.

The two parts can be performed successively or simultaneously.

During a step 805, one link l between one of the source nodes and one of the relay nodes is selected in graph G. In other words, one connection is selected during step 805. This selection is either randomly performed or based on an additional parameter, for example the connectivity value measured for each transmission between two nodes (SNR or RSSI): the selected link is the one having the worst connectivity value, i.e., the lowest value of SNR or RSSI.

During a step 810, the new graph G'=G - I, that is equal to G without the link I is created. Steps 815, 820 and 825 are, respectively, identical to steps 430, 440 and 450 applied to graph G'. If one of these steps provides a negative value, step 835 is proceeded to. Otherwise, step 830 is proceeded to.

Reaching step 830 means that the selected link I can be deactivated. In a wire network, the system can send a "user power save reconfiguration" notification so that the user may manually deactivate the link. In a wireless network, a "power save reconfiguration" notification is sent to the radio sender/receiver unit 240. The radio sender/receiver unit 240 then tries, if applicable:

- to decrease the transmit power configuration without removing any other connection and/or
- to modify the orientation of the emitter antenna beam to strengthen other connections.

Reaching step 835 means that the selected link I cannot be deactivated: nothing is to be done. After steps 830 or 835, the system may proceed to step 805 with a selection of another, not yet processed, link.

During a step 840, the variable i is initialized at the value "1", i being a destination node identifier. During a step 845, the number of redundant links for the destination node $d_i$ is determined and represented by the variable $C_i$:

$C_i$ = card $(SR_i)$ - card $(SR_{min})$, with $SR_i$ the sub-set of relay nodes connected to the destination node $d_i$ and $SR_{min}$ a minimal sub-set.

During a step 850, $C_i$ links are selected. This selection is either randomly performed or based on an additional parameter such as the connectivity value measured for each transmission (SNR or RSSI): the $C_i$ selected links are the connections which have the $C_i$ worst connectivity information, i.e., the lowest values of SNR or RSSI.

It should be noticed that the lowest values of SNR or RSSI are nevertheless higher than the predetermined threshold since a connection exists.

During a step 855 the $C_i$ selected links are deactivated. Then, in a wire network, the system can send a "user power save reconfiguration" notification so that the user may manually deactivate the link. In a wireless network, a "power save reconfiguration" notification is sent to the radio sender/receiver unit 240. The radio sender/receiver unit 240 then tries, if applicable,

- to decrease the transmit power configuration without removing any other connection and/or

- to modify the orientation of the emitter antenna beam to strengthen the other connections.

During a step 860, it is determined whether all the destination nodes have been processed. If the variable i is equal to D+1, then, during a step 865, the algorithm of Figure 8 is interrupted. Otherwise step 845 is proceeded to.

Figure 9 illustrates an exemplary flowchart for computing a distributed error correction code, by determining the coefficients of the network coding matrix $(\alpha_{ij})$. This flowchart is carried out by a centralized node of the meshed network. The purpose of the flowchart of Figure 9 is to find a generator matrix for an (N, K)-Reed-Solomon code (i.e., a N-by-K matrix of rank K, wherein each of the K columns is a code word of said code) with the constraint that "0" must be positioned in the matrix cells corresponding to links that do not exist between a source node j and a relay node i.

During a step 901, the variable N is set to the number of active relay nodes. It is to be recalled here that the "power save" mode may reduce the initial number of relay nodes. During a step 902, the variable K is set to the value N-M, M being computed as described with reference to Figure 5.

During a step 905, a Galois Field GF(q) with sufficient size q for implementing the invention is chosen. The maximal block length N of a non-extended (N, K)-Reed-Solomon code is equal to q-1. In a preferred embodiment, $q = 2^8 = 256$ and the number of relay nodes N is inferior or equal to 255, a restriction which does not appear to be a practical hindrance in most cases that will occur in the application domain of the present invention. If N is strictly less than q-1, the (N, K)-Reed-Solomon code used is a so-called "shortened code". In an alternative implementation, the number m of bits per symbol is chosen in such a manner that $N < 2^m$ and the Galois Field $GF(2^m)$ is used.

During a step 910, a matrix with N rows and K columns is created (each row corresponding to a relay node and each column corresponding to a source node), wherein the coefficients of said matrix are able to represent each of the q symbols of GF(q) as well as two special symbols that are different from each one of the symbols from GF(q), and represents an "indeterminate" value and an "erasure" value. Initially, all coefficients of the matrix are set to the indeterminate value.

During a step 915, the connectivity between all the source nodes and all the relay nodes is taken into consideration and the value "0" is positioned into the coefficient $\alpha_{ij}$ if and only if no connection exists between source node $SRC_j$ and relay node $REL_i$. The remaining coefficients, corresponding to existent connections, remain indeterminate.

During a step 920, the column index j is initialized at the value "1", the matrix columns, corresponding to the source nodes, being numbered from 1 to K.

During a step 925, $Z_j$, the number of "0" in col-

umn j, is determined, $Z_j \leq K-1$ being guaranteed after the tests of the existence of such a code (see Figure 4).

During a step 930, among the coefficients in column j with an indeterminate value (i.e., not "0"), the coefficient with the lowest row index is set to "1", "1" being the neutral element of GF(q) with regard to multiplication. It should be noted that, for any suitable choice of the column vector, there always exists a multiple of said column vector having a "1" at the lowest non-0 position which is equally suitable. Hence the choice of "1" during step 930 does not restrict the space of possible solutions.

During a step 935, among the coefficients in column j with an indeterminate value (i.e., not "0" or "1"), the $K-Z_j-1$ coefficients with the lowest row indices are set to randomly chosen symbols from GF(q). Any true or pseudo-random generator having sufficiently high periodicity is suitable for performing step 935.

During a step 940, the remaining N-K coefficients in column j with an indeterminate value are set to the "erasure" value.

During a step 945, an (N, K)-Reed-Solomon code word is generated in column j while taking into account the N-K erasures, using a well-known correction technique. The resulting code word is equal to the original word in the K positions that were not erasures (in particular, each "0" positioned during step 915 is still present), while said N-K erasures are replaced by symbols from GF(q). It is a well-known fact that exactly one such code word exists.

During a step 950, the column index j is incremented by "1". During a step 955, it is determined whether j is less than or equal to K. If yes, step 925 is proceeded to (consequently, steps 925 through 945 are repeated for j = 1 to K). Otherwise, a step 960 is proceeded to.

At the beginning of step 960, all K columns of the matrix are filled with (N, K)-Reed-Solomon code words. During step 960, the rank of the matrix is determined and compared to K. If the rank is less than K, the columns are linearly dependent and step 920 is proceeded to, after resetting all non-"0" coefficients to the indeterminate value. Consequently, steps 920 through 960 are repeated, but during step 935, different random coefficients are chosen, resulting in a different matrix which will eventually have rank K. If the rank of the matrix is K, step 965 is proceeded to and the obtained matrix $A=(\alpha_{ij})$ is output for further processing.

Figures 10a and 10b respectively show two main flowcharts run by the relay nodes RELi (with i = 1, 2, ..., N). Figure 10a shows the steps performed for updating the network coding coefficients in the preferred embodiment. After the start, during a step 1000, during a step 1001, reception of a control packet 350 is waited for and performed. That control packet 350 originates from the centralized node and represents the network coding coefficients $(\alpha_{ij})$. During a step 1002, the relay node extracts the total number of relay nodes N and the total number of source nodes K from field 351 of packet 350 and stores them. During a step 1003, the list of all K source node unique identifiers is extracted from field 352 and stored. During a step 1004, field 36i is located by comparing the relay node unique identifiers $REL_1$, $REL_2$, ..., $REL_N$ contained at the beginning of fields 361, 362, ..., 36N with the own unique identifier of relay node $REL_i$. During a step 1005, the K network coding coefficients relevant for the relay node $REL_i$, $\alpha_{i1}$, $\alpha_{i2}$, ..., $\alpha_{iK}$ are extracted from field 36i and stored to be used during a step 1058 described below. Except if an error occurred, at this point $\alpha_{ij} \neq 0$ if and only if source node $SRC_j$ is connected to relay node $REL_i$.

Figure 10b shows steps performed for data reception, encoding and retransmission in a preferred mode embodiment. During a step 1050 the start of a new super-frame is detected. During a step 1051, a source node counter j is initialized at the value "1 ". During a step 1052, the start of the time slot allotted to source node $SRC_j$ within sub-sequence 301 of the current super-frame 300 is detected. During a step 1053 it is determined whether source node $SRC_j$ is connected to relay node $REL_i$. If yes, a step 1054 is proceeded to. Otherwise a step 1055 is proceeded to. During step 1054 the data packet $s_j$ of length L, issued by the source node $SRC_j$ are received and stored. Whenever a reception error is detected during step 1054 (for example, by analyzing RSSI or SNR or calculating a CRC), the reception error is memorized in a flag for the purpose of a step 1057 described below. During step 1055, the source node counter j is incremented by "1 ". During a step 1056, it is determined whether the source node counter j is less than or equal to the total number of source nodes K. If yes, step 1052 is proceeded to (consequently, steps 1052 though 1054 are repeated for j = 1, 2, ... , K). Otherwise step 1057 is proceeded to.

During step 1057, it is determined whether a reception error has been detected during any one of the preceding executions of step 1054 within the current super-frame 300. If yes step 1061 is proceeded to. Otherwise step 1058 is proceeded to. During step 1058, the linear combination of the received source packets $s_j$ (being vectors of length L over GF(q)), is calculated using the scalar coefficients $\alpha_{ij}$ as received and stored according to step 1005 described above, to obtain the encoded packet $r_i$, which is also a vector of length L over GF(q). It should be noted that source packets $s_j$ that are not available for calculation to relay node $REL_i$ because their originating source nodes $SRC_j$ are not connected, are not needed since the corresponding coefficients $\alpha_{ij}$ are equal to "0". In a variant, the value of $r_i$ is calculated in a cumulative manner during step 1054, after initializing the value vector $r_i$ with the null vector during step 1051.

During a step 1059, that follows step 1058, relay node $REL_i$ detects the start of the time slot allotted to itself within sub-sequence 302 of the super-frame 300. During a step 1060, relay node $REL_i$ transmits the encoded packet $r_i$. Then, the process ends, during a step 1063, until the start of a new super-frame is detected.

A step 1061, carried out on detection of any reception error (see step 1057 above), is similar to step 1059 of detecting the start of the time slot allotted to relay node REL$_i$, the only difference being that it is followed by a step 1062 of transmitting an "error" notification instead of the encoded data packet. In a particular embodiment, relay node REL$_i$ remains silent during its allotted time slot, a condition appropriately detectable by the destination node. In another embodiment, during step 1062, relay node REL$_i$ transmits a partial linear combination, taking into account only the source data packets for which no reception error was detected, together with an indication of the missing source nodes. It should be noted that the destination node could use such information, representing supplementary linear equations, to perform redundant data verifications after step 1160, for increasing the confidence level of the decoded data. In any case, step 1063 is then proceeded to.

Figure 11 shows a flowchart for receiving an encoded data packet, Reed-Solomon decoding and recovering the original source data, that flowchart being used by the destination nodes DST$_1$ to DST$_D$ in a preferred embodiment. This flowchart starts, during a step 1150, by detecting the start of a new super-frame 300. During a step 1151, the relay node counter i is initialized to 1. During a step 1152, the destination node waits for the start of the time slot allotted to the relay node REL$_i$ within the sub-sequence 302 of the super-frame 300. During a step 1153, the encoded data packet r$_i$ is received, this packet r$_i$ being an element of GF(q)L.

During a step 1154, the successful reception of said data packet is determined. If the reception is successful, a step 1155 is proceeded to. Otherwise, i.e. when a reception error is detected or when the "error" notification issued by the relay node during step 1062 is detected, a step 1156 is proceeded to. It should be noted that, if the relay node REL$_i$ is not considered as connected to the destination node in question, the reception is likely to fail.

It should be noted that the connected or not connected state of a relay node and a destination node may differ from the status as determined during the system initialisation, due for example to appearing or disappearing obstacles.

During step 1155, the received data packet r$_i$ is stored in the i$^{th}$ row of an N-by-L matrix ($\rho_{ih}$). During step 1156, said row is filled with erasure symbols. During a step 1157, the relay node counter i is incremented by "1". During a step 1158, it is determined whether the relay node counter i is less than or equal to the total number of relay nodes N. If yes, step 1152 is proceeded to (consequently, steps 1152 to 1158 are repeated for i = 1, 2, ... , N). Otherwise a step 1159 is proceeded to.

During step 1159, (N, K)-Reed-Solomon error and erasure correction is carried out for each one of the L columns of matrix ($\rho_{ih}$), taking into account possible erasures as stored during step 1156. Any one of the well-known Reed-Solomon error correction algorithms is suitable for carrying out step 1159. An error correction failure, caused by too many errors or erasures, causes the algorithm to abort and send an "error" notification. Otherwise, during a step 1160, the original K-by-L source data matrix ($\sigma_{jh}$) (the rows of which constitute the original source data packets sj) is recovered from the error-corrected N-by-L received-data matrix ($\rho_{ih}$). This step is performed by solving the linear equation system ($\rho_{ih}$) = ($\alpha_{ij}$)*($\sigma_{jh}$). While this system is over-determined (N equations for K unknowns with N>K), the equations are guaranteed not to be contradictory due to the Reed-Solomon error correction. Dropping the N - K last rows of matrix ($\rho_{ih}$) and multiplying the obtained K-by-L matrix by the matrix C previously determined during step 470, the source data matrix is obtained: ($\sigma_{jh}$) = C*($\rho_{ih}$). During a step 1161, the K rows from said matrix ($\sigma_{jh}$), which constitute the original source data packets s$_j$ of length L, are output for further processing by the application 230, this further processing being out of the scope of present invention. The algorithm ends during a step 1162, until the start of the next super-frame 300 is detected.

In another particular embodiment (not shown) of the present invention, only the coefficients of the code generator matrix ($\alpha_{ij}$) corresponding to existing links between sources nodes and relay nodes are sent from the device which generates the generator matrix to the relay nodes (see fields 46i). The sent coefficients thus are the coefficients remaining after step 508. In this particular embodiment, the relay node positions "0" in the matrix ($\sigma_{jl}$) of received data packets, at each position corresponding to a source node from which no data packet is received. Thus, whatever the value of the coefficients at the corresponding positions of the matrix of coefficients used by the relay node for calculating the linear combinations, the multiplication of said coefficients by "0" is "0", i.e., the same value as in the particular embodiments illustrated in the Figures.

Generally speaking, at least the remaining coefficients after positioning "0" for each position in the generator matrix that corresponds to a source node and a relay node between which no link exists, are to be distributed to the relay nodes.

**Claims**

1. A method of achieving a predetermined error correction capacity R in a data communication network that performs a distributed error correction coding, the communication network being formed by a plurality of K source nodes, N relay nodes and D destination nodes interconnected by means of a plurality of connections, the method comprising configuring said network and the method comprising:

    - a step of determining whether the communication network has a network error correction capacity at least equal to R by checking if a predetermined set of conditions (430, 440, 450) are fulfilled; and

- if it is determined that the communication network does not have a network error correction capacity at least equal to R, a first step of reconfiguring the communication network, **characterized in that** said first step comprises at least one of adding at least one connection and activating at least one relay node in said communication network, at least one of said connection to be added and said relay node to be activated depending upon at least one condition that was not fulfilled,

wherein the set of conditions comprises at least:
- a first condition (430) as whether there are enough relay nodes relative to the plurality of source nodes,
- a second condition (440) as whether each non-empty set $\Sigma$ of source nodes among the plurality of source nodes has enough connections to the relay nodes, and
- a third condition (450) as whether there are enough connections between the relay nodes and the destination nodes relatively to the set of source nodes that is the less connected to the relay nodes;

wherein the first condition is fulfilled if the number N of relay nodes minus the number K of source nodes is superior or equal to R;

wherein the second condition is fulfilled if each non-empty set $\Sigma$ of the plurality of K source nodes is connected to at least R + card(Z) relay nodes among the N relay nodes, where card($\Sigma$) is the cardinal of $\Sigma$;

wherein the third condition is fulfilled if R is lower than M - N + card($SR_{min}$), where:
- $SR_{min}$ is the smallest set of relay nodes connected to a destination node; and
- M is the minimal difference, for all possible sets of source nodes, between the cardinal of the set of relay nodes connected to the set of source nodes and the cardinal of said set of source nodes.

2. A method according to claim 1, wherein, if the first condition is not fulfilled, the step of reconfiguring comprises a step of activating at least N - K - R relay nodes not already activated.

3. A method according to any one of claims 1 and 2, wherein, if the second condition is not fulfilled, the method further comprises a step of determining a set $\Sigma$ of the plurality of K source nodes that is not connected to at least R + card($\Sigma$) relay nodes among the N relay nodes;
and wherein the step of reconfiguring comprises a step of adding at least one connection between at least one source node of said determined set $\Sigma$ and a relay node that is not already connected to any source node of said determined set $\Sigma$.

4. A method according to any one of claims 1 to 3, wherein, if the third condition is not fulfilled, the method further comprises a step of identifying each destination node having the minimum number of connections with the relay nodes;
and wherein the step of reconfiguring comprises a step of adding, for each of the identified destination nodes, at least one connection between said destination nodes and any one of the relay nodes that is not already connected to said destination node.

5. A method according to any one of claims 1 to 4, that comprises, if it is determined that the communication network has a network error correction capacity at least equal to R, a second step of reconfiguring the communication network comprising:

  - a step of selecting N - R - K relay nodes among the N relay nodes of said network and
  - if the communication network without the N - R - K selected relay nodes has a network error correction capacity at least equal to R, a step of deactivating the N - R - K selected relay nodes.

6. A method according to any one of claims 1 to 7, that comprises, if it is determined that the communication network has a network error correction capacity at least equal to R, a third step of configuring the communication network comprising:

  - a step of determining a set of relay nodes, called $K_{rr}$, having connectivity number $rr_i$ equal to $rr_{max}$, wherein $rr_{max}$ is the maximum value of the connectivity numbers $rr_i$.
  - a step of deactivating M - R + N - Card($SR_{min}$) relay nodes of the set $K_{rr}$.

7. A method according to any one of claims 1 to 6, that comprises, if it is determined that the communication network has a network error correction capacity at least equal to R, a fourth step of configuring the communication network comprising:

  - a step of selecting at least one connection between the source nodes and the relay nodes,
  - a step of performing, on the communication network without the selected connection:
  - a step of determining whether the number of relay nodes is such that each non-empty subset of size S of the set of source nodes is connected, without the selected connection, to at least S+R relay nodes among the relay nodes and
  - a step of determining whether R is lower than M - N + card($SR_{min}$), for a destination node having the minimum number of connections with the relay nodes,

- if the result of the step of performing is positive,
- a step of determining that each selected connection is useless,
- for each destination node, selecting ($\text{card}(SR_i)$ - $\text{card}(SR_{min})$)) connections, wherein $SR_i$ is the sub-set of relay nodes connected to the destination node $D_i$ and $SR_{min}$ is the minimal sub-set and
- a step of deactivating the selected connections.

8. A method according to claim 7, wherein the selection step is based on a connection quality value and comprises:

- a step of assessing the quality of each connection between two network nodes and
- a step of selecting the connections which have the lowest quality value.

9. A device for achieving a predetermined error correction capacity R in a data communication network that performs a distributed error correction coding so as to, the communication network being formed by a plurality of K source nodes, N relay nodes and D destination nodes interconnected by means of a plurality of connections, the device being configured to configure the network and the device comprises:

- determining means adapted to determine whether the communication network has a network error correction capacity at least equal to R by checking if a predetermined set of conditions are fulfilled; and
- reconfiguration means adapted, if the determining means determines that the communication network does not have a network error correction capacity at least equal to R, to reconfigure the communication network **characterized in that** the reconfiguration of the communication network comprises performing at least one of adding at least one connection and activating at least one relay node in said communication network, at least one of said connection to be added and said relay node to be activated being dependent upon at least one said condition that was not fulfilled,
wherein the set of conditions comprises at least:
- a first condition (430) as whether there are enough relay nodes relative to the plurality of source nodes,
- a second condition (440) as whether each non-empty set $\Sigma$ of source nodes among the plurality of source nodes has enough connections to the relay nodes, and
- a third condition (450) as whether there are enough connections between the relay nodes and the destination nodes relatively to the set of source nodes that is the less connected to the relay nodes

wherein the first condition is fulfilled if the number N of relay nodes minus the number K of source nodes is superior or equal to R;
wherein the second condition is fulfilled if each non-empty set $\Sigma$ of the plurality of K source nodes is connected to at least R + $\text{card}(\Sigma)$ relay nodes among the N relay nodes, where $\text{card}(\Sigma)$ is the cardinal of $\Sigma$;
wherein the third condition is fulfilled if R is lower than M - N + $\text{card}(SR_{min})$, where:
- $SR_{min}$ is the smallest set of relay nodes connected to a destination node; and
- M is the minimal difference, for all possible sets of source nodes, between the cardinal of the set of relay nodes connected to the set of source nodes and the cardinal of said set of source nodes.

10. A computer program loadable into a computer system, said program containing instructions enabling the implementation of the method according to any one of claims 1 to 8, when that program is loaded and executed by a computer system.

11. An information carrier readable by a computer or a microprocessor, removable or not, storing instructions of a computer program, **characterized in that** it enables the implementation of the method according to any one of claims 1 to 8.

**Patentansprüche**

1. Verfahren eines Erhaltens einer vorbestimmten Fehlerkorrekturkapazität R in einem Datenkommunikationsnetzwerk, das eine Verteilte-Fehler-Korrektur-Codierung durchführt, wobei das Kommunikationsnetzwerk durch eine Vielzahl von K Quellknoten, N Relaisknoten, und D Zielknoten gebildet ist, die mittels einer Vielzahl von Verbindungen miteinander verbunden sind, wobei das Verfahren ein Konfigurieren des Netzwerks aufweist, und das Verfahren ferner aufweist

einen Schritt eines Bestimmens, ob das Kommunikationsnetzwerk eine Netzwerkfehlerkorrekturkapazität von zumindest gleich R hat durch Überprüfen, ob ein vorbestimmter Satz von Bedingungen (430, 440, 450) erfüllt ist, und

wenn bestimmt ist, dass das Kommunikationsnetzwerk keine Netzwerkfehlerkorrekturkapazität von zumindest R hat, einen ersten Schritt eines Umkonfigurierens des Kommunikationsnetzwerks,
**dadurch gekennzeichnet, dass**
der erste Schritt zumindest eines aus einem Hinzufügen von zumindest einer Verbindung und einem Aktivieren von zumindest einem Relaisknoten in dem Kommunikationsnetzwerk umfasst, wobei zumindest eine der hinzuzufügenden Verbindung und der zu aktivierende Relaisknoten von zumindest einer Bedingung abhängen, die nicht erfüllt ist,

wobei der Satz von Bedingungen zumindest umfasst eine erste Bedingung (430), ob relativ zu der Vielzahl von Quellknoten genügend Relaisknoten existieren, eine zweite Bedingung (440), ob jeder nicht leere Satz $\Sigma$ von Quellknoten aus der Vielzahl von Quellknoten genügend Verbindungen zu den Relaisknoten hat, und

eine dritte Bedingung (450), ob genügend Verbindungen zwischen den Relaisknoten und den Zielknoten relativ zu dem Satz von Quellknoten existieren, der der zu den Relaisknoten am wenigsten verbundene ist,

wobei die erste Bedingung erfüllt ist, wenn die Anzahl N von Relaisknoten minus die Anzahl K von Quellknoten größer oder gleich R ist,

wobei die zweite Bedingung erfüllt ist, wenn jeder nicht leere Satz $\Sigma$ der Vielzahl von K Quellknoten mit zumindest $R + card(\Sigma)$ Relaisknoten aus den N Relaisknoten verbunden ist, wobei $card(\Sigma)$ die Kardinalzahl von $\Sigma$ ist,

wobei die dritte Bedingung erfüllt ist, wenn R kleiner als $M - N + card(SR_{min})$ ist, wobei

$SR_{min}$ der kleinste Satz von mit einem Zielknoten verbundenen Relaisknoten ist, und

M die Minimaldifferenz für alle möglichen Sätze von Quellknoten zwischen der Kardinalzahl des Satzes von mit dem Satz von Quellknoten verbundenen Relaisknoten und der Kardinalzahl des Satzes von Quellknoten ist.

2. Verfahren nach Anspruch 1, wobei, wenn die erste Bedingung nicht erfüllt ist, der Schritt eines Umkonfigurierens einen Schritt eines Aktivierens von zumindest N - K - R nicht bereits aktivierten Relaisknoten aufweist.

3. Verfahren nach einem der Ansprüche 1 und 2, wobei, wenn die zweite Bedingung nicht erfüllt ist, das Verfahren ferner einen Schritt eines Bestimmens eines Satzes $\Sigma$ der Vielzahl von K Quellknoten, der nicht mit zumindest $R + card(\Sigma)$ Relaisknoten aus den N Relaisknoten verbunden ist, aufweist, und wobei der Schritt eines Umkonfigurierens einen Schritt eines Hinzufügens zumindest einer Verbindung zwischen zumindest einem Quellknoten des bestimmten Satzes $\Sigma$ und einem Relaisknoten, der nicht bereits mit irgendeinem Quellknoten des bestimmten Satzes $\Sigma$ verbunden ist, aufweist.

4. Verfahren nach einem der Ansprüche 1 bis 3, wobei, wenn die dritte Bedingung nicht erfüllt ist, das Verfahren ferner einen Schritt eines Identifizierens jedes Zielknotens mit der Minimalanzahl von Verbindungen mit den Relaisknoten aufweist, und wobei der Schritt eines Umkonfigurierens einen Schritt eines Hinzufügens, für jeden der identifizierten Zielknoten, von zumindest einer Verbindung zwischen den Zielknoten und irgendeinem der Relaisknoten, der nicht bereits mit dem Zielknoten verbunden ist, aufweist.

5. Verfahren nach einem der Ansprüche 1 bis 4, wobei das Verfahren, wenn bestimmt ist, dass das Kommunikationsnetzwerk eine Netzwerkfehlerkorrekturkapazität von zumindest gleich R hat, einen zweiten Schritt eines Umkonfigurierens des Kommunikationsnetzwerks aufweist, der umfasst:

einen Schritt eines Auswählens von N - R - K Relaisknoten aus den N Relaisknoten des Netzwerks, und

wenn das Kommunikationsnetzwerk ohne die N - R - K ausgewählten Relaisknoten eine Netzwerkfehlerkorrekturkapazität von zumindest gleich R hat, einen Schritt eines Deaktivierens der N - R - K ausgewählten Relaisknoten.

6. Verfahren nach einem der Ansprüche 1 bis 7, wobei das Verfahren, wenn bestimmt ist, dass das Kommunikationsnetzwerk eine Netzwerkfehlerkorrekturkapazität von zumindest gleich R hat, einen dritten Schritt eines Konfigurierens des Kommunikationsnetzwerks aufweist, der umfasst einen Schritt eines Bestimmens eines Satzes von Relaisknoten, der $K_{rr}$ benannt ist, mit einer Konnektivitätszahl $rr_i$ gleich $rr_{max}$, wobei $rr_{max}$ der Maximalwert der Konnektivitätszahlen $rr_i$ ist, und einen Schritt eines Deaktivierens von $M - R + N - card(SR_{min})$ Relaisknoten des Satzes $K_{rr}$.

7. Verfahren nach einem der Ansprüche 1 bis 6, wobei das Verfahren, wenn bestimmt ist, dass das Kommunikationsnetzwerk eine Netzwerkfehlerkorrekturkapazität von zumindest gleich R hat, einen vierten Schritt eines Konfigurierens des Kommunikationsnetzwerks aufweist, der umfasst einen Schritt eines Auswählens von zumindest einer Verbindung zwischen den Quellknoten und den Relaisknoten,

einen Schritt eines Durchführens, bezüglich des Kommunikationsnetzwerks ohne die ausgewählte Verbindung,

eines Schrittes eines Bestimmens, ob die Anzahl von Relaisknoten derart ist, dass jeder nicht leere Unter-Satz der Größe S des Satzes von Quellknoten, ohne die ausgewählte Verbindung, mit zumindest S + R Relaisknoten aus den Relaisknoten verbunden ist, und

eines Schrittes eines Bestimmens, ob R kleiner als $M - N + card(SR_{min})$ ist für einen Zielknoten mit der Minimalanzahl von Verbindungen mit den Relaisknoten,

und wenn das Ergebnis des Schrittes eines Durchführens positiv ist

einen Schritt eines Bestimmens, dass jede ausgewählte Verbindung nutzlos ist

eines Auswählens, für jeden Zielknoten, von $(card(SR_i) - card(SR_{min}))$ Verbindungen, wobei $SR_i$ der Unter-Satz von mit dem Zielknoten $D_i$ verbundenen Relaisknoten ist und $SR_{min}$ der Minimal-Unter-Satz ist, und

einen Schritt eines Deaktivierens der ausgewählten Verbindungen.

8. Verfahren nach Anspruch 7, wobei der Auswahlschritt auf einem Verbindungsqualitätswert basiert und umfasst

einen Schritt eines Bewertens der Qualität jeder Verbindung zwischen zwei Netzwerkknoten, und
einen Schritt eines Auswählens der Verbindungen, die den geringsten Qualitätswert haben.

9. Vorrichtung für ein Erhalten einer vorbestimmten Fehlerkorrekturkapazität R in einem Datenkommunikationsnetzwerk, das eine Verteilte-Fehler-Korrektur-Codierung durchführt, wobei das Kommunikationsnetzwerk durch eine Vielzahl von K Quellknoten, N Relaisknoten, und D Zielknoten gebildet ist, die mittels einer Vielzahl von Verbindungen miteinander verbunden sind, wobei die Vorrichtung dazu eingerichtet ist, um das Netzwerk zu konfigurieren, wobei die Vorrichtung umfasst

eine Bestimmungseinrichtung, die dazu eingerichtet ist, um zu bestimmen, ob das Kommunikationsnetzwerk eine Netzwerkfehlerkorrekturkapazität von zumindest gleich R hat durch Überprüfen, ob ein vorbestimmter Satz von Bedingungen erfüllt ist, und
eine Umkonfigurierungseinrichtung, die dazu eingerichtet ist, wenn die Bestimmungseinrichtung bestimmt, dass das Kommunikationsnetzwerk keine Netzwerkfehlerkorrekturkapazität von zumindest R hat, das Kommunikationsnetzwerk umzukonfigurieren,
**dadurch gekennzeichnet, dass** die Umkonfigurierung des Kommunikationsnetzwerks umfasst
ein Durchführen von zumindest einem aus einem Hinzufügen von zumindest einer Verbindung und einem Aktivieren von zumindest einem Relaisknoten in dem Kommunikationsnetzwerk, wobei zumindest eine der hinzuzufügenden Verbindung und der zu aktivierende Relaisknoten von zumindest einer der Bedingung abhängen, die nicht erfüllt ist,
wobei der Satz von Bedingungen zumindest umfasst
eine erste Bedingung (430), ob relativ zu der Vielzahl von Quellknoten genügend Relaisknoten existieren, eine zweite Bedingung (440), ob jeder nicht leere Satz Σ von Quellknoten aus der Vielzahl von Quellknoten genügend Verbindungen zu den Relaisknoten hat, und
eine dritte Bedingung (450), ob genügend Verbindungen zwischen den Relaisknoten und den Zielknoten relativ zu dem Satz von Quellknoten existieren, der der zu den Relaisknoten am wenigsten verbundene ist,

wobei die erste Bedingung erfüllt ist, wenn die Anzahl N von Relaisknoten minus die Anzahl K von Quellknoten größer oder gleich R ist,
wobei die zweite Bedingung erfüllt ist, wenn jeder nicht leere Satz Σ der Vielzahl von K Quellknoten mit zumindest $R + card(\Sigma)$ Relaisknoten aus den N Relaisknoten verbunden ist, wobei $card(\Sigma)$ die Kardinalzahl von Σ ist,
wobei die dritte Bedingung erfüllt ist, wenn R kleiner als $M - N + card(SR_{min})$ ist, wobei
$SR_{min}$ der kleinste Satz von mit einem Zielknoten verbundenen Relaisknoten ist, und
M die Minimaldifferenz für alle möglichen Sätze von Quellknoten zwischen der Kardinalzahl des Satzes von mit dem Satz von Quellknoten verbundenen Relaisknoten und der Kardinalzahl des Satzes von Quellknoten ist.

10. Computerprogramm, das in ein Computersystem ladbar ist, wobei das Programm Anweisungen enthält, die die Implementierung des Verfahrens gemäß einem der Ansprüche 1 bis 8 ermöglichen, wenn das Programm durch ein Computersystem geladen und ausgeführt wird.

11. Informationsträger, der von einem Computer oder Mikroprozessor lesbar ist, der entfernbar ist oder nicht, der Anweisungen eines Computerprogramms speichert, das **dadurch gekennzeichnet ist, dass** es die Implementierung des Verfahrens nach einem der Ansprüche 1 bis 8 ermöglicht.

**Revendications**

1. Procédé pour atteindre une capacité prédéterminée de correction d'erreurs R sur un réseau de communication de données qui effectue un codage distribué de correction des erreurs, le réseau de communication étant formé d'une pluralité de K noeuds de source, de N noeuds relais et de D noeuds de destination interconnectés par une pluralité de connexions, le procédé comprenant la configuration dudit réseau et le procédé comprenant :

 - une étape consistant à déterminer si le réseau de communication possède une capacité de correction des erreurs par le réseau égale à R en vérifiant si un ensemble prédéterminé de conditions (430, 440, 450) est satisfait ; et
 - s'il est déterminé que le réseau de communication ne possède pas une capacité de correction des erreurs par le réseau au moins égale à R, une première étape de reconfiguration du réseau de communication, **caractérisé en ce que** ladite première étape comprend au moins une étape consistant à ajouter au moins une connexion et à activer au moins un noeud relai dans ledit réseau de communication, au moins un élément parmi ladite connexion à ajouter et ledit noeud relai à activer dépendant d'au moins une condition qui n'était pas satisfaite ;

dans lequel l'ensemble de conditions comprend au moins :

- une première condition (430) étant qu'il y ait assez de noeuds relais par rapport à la pluralité de noeuds de source ;
- une deuxième condition (440) étant que tout ensemble non vide $\Sigma$ de noeuds de source, parmi la pluralité de noeuds de source, possède suffisamment de connexions avec les noeuds relais ; et
- une troisième condition (450) étant qu'il existe suffisamment de connexions entre les noeuds relais et les noeuds de destination par rapport à l'ensemble de noeuds de source qui est le moins connecté aux noeuds relais ;

dans lequel la première condition est satisfaite si le nombre N de noeuds relais moins le nombre K de noeuds de source est égal ou supérieur à R ;

dans lequel la deuxième condition est satisfaite si tout ensemble non vide $\Sigma$, parmi la pluralité de K noeuds de source, est connecté à au moins $R + card (\Sigma)$ noeuds relais parmi les N noeuds relais, où $card (\Sigma)$ est le cardinal de $\Sigma$ ;

dans lequel la troisième condition est satisfaite si R est inférieur à $M - N + card (SR_{min})$, où
- $SR_{min}$ est le plus petit ensemble de noeuds relais connectés à un noeud de destination ; et
- M est la différence minimale, pour tous les ensembles possibles de noeuds de source, entre le cardinal de l'ensemble de noeuds relais connectés à l'ensemble de noeuds de source et le cardinal dudit ensemble de noeuds de source.

2. Procédé selon la revendication 1, dans lequel, si la première condition n'est pas satisfaite, l'étape de reconfiguration comprend une étape consistant à activer au moins N - K - R noeuds relais qui ne sont pas encore activés.

3. Procédé selon l'une quelconque des revendications 1 et 2, dans lequel, si la deuxième condition n'est pas satisfaite, le procédé comprend en outre une étape consistant à déterminer dans la pluralité de K noeuds de source un ensemble $\Sigma$ de noeuds qui ne sont pas connectés à au moins $R + card (\Sigma)$ noeuds relais parmi les N noeuds relais ; et

dans lequel l'étape de reconfiguration comprend une étape consistant à ajouter au moins une connexion entre au moins un noeud de source dudit ensemble $\Sigma$ déterminé et un noeud relai qui n'est pas encore connecté à un noeud de source quelconque dans ledit ensemble $\Sigma$ déterminé.

4. Procédé selon l'une quelconque des revendications 1 à 3, dans lequel, si la troisième condition n'est pas satisfaite, le procédé comprend en outre une étape consistant à identifier tous les noeuds de destination ayant le nombre minimal de connexions avec les noeuds relais ; et

dans lequel l'étape de reconfiguration comprend une étape consistant à ajouter, pour chacun des noeuds de destination identifiés, au moins une connexion entre lesdits noeuds de destination et l'un quelconque des noeuds relais qui n'est pas encore connecté audit noeud de destination.

5. Procédé selon l'une quelconque des revendications 1 à 4, comprenant, s'il est déterminé que le réseau de communication possède une capacité de correction d'erreurs par le réseau au moins égale à R, une deuxième étape consistant à reconfigurer le réseau de communication comprenant :

- une étape consistant à sélectionner N - R - K noeuds relais parmi les N noeuds relais dudit réseau ; et
- si le réseau de communication sans les N - R - K noeuds relais sélectionné possède une capacité de correction des erreurs par le réseau au moins égale à R, une étape consistant à désactiver les N - R - K noeuds relais sélectionnés.

6. Procédé selon l'une quelconque des revendications 1 à 7, comprenant, s'il est déterminé que le réseau de communication possède une capacité de correction des erreurs par le réseau qui est au moins égale à R, une troisième étape consistant à configurer le réseau de communication et comprenant :

- une étape consistant à déterminer un ensemble de noeuds relais, appelé $K_{rr}$, ayant un indice de connectivité $rr_i$ égal à $rr_{max}$, où $rr_{max}$ est la valeur maximale des indices de connectivité $rr_i$;
- une étape consistant à désactiver $M - R + N - card (SR_{min})$ noeuds relais de l'ensemble $K_{rr}$.

7. Procédé selon l'une quelconque des revendications 1 à 6, comprenant, s'il est déterminé que le réseau de communication a une capacité de correction des erreurs par le réseau au moins égale à R, une quatrième étape consistant à configurer le réseau de communication et comprenant :

- une étape consistant à sélectionner au moins une connexion entre les noeuds de source et les noeuds relais ;

- une étape consistant à mettre en oeuvre sur le réseau de communication sans la connexion sélectionnée :
- une étape consistant à déterminer si le nombre des noeuds relais est tel que tout sous-ensemble non vide de taille S dans l'ensemble des noeuds de source est connecté, sans la connexion sélectionnée, à au moins S + R noeuds relais parmi les noeuds relais ; et
- une étape consistant à déterminer si R est inférieur à M - N + card ($SR_{min}$), pour un noeud de destination ayant le nombre minimal de connexions avec les noeuds relais ;
- si le résultat de l'étape de fonctionnement est positif :
- une étape consistant à déterminer que chaque connexion sélectionnée est inutile ;
- pour chaque noeud de destination, sélectionner (card ($SR_i$) - card ($SR_{min}$)) connexions, où $SR_i$ est le sous-ensemble de noeuds relais connectés au noeud de destination $D_i$ et $SR_{min}$ est le sous-ensemble minimal ; et
- une étape consistant à désactiver les connexions sélectionnées.

8.  Procédé selon la revendication 7, dans lequel l'étape de sélection est fondée sur une valeur de la qualité de connexion et comprend :

- une étape consistant à évaluer la qualité de chaque connexion entre deux noeuds de réseau ; et
- une étape consistant à sélectionner les connexions qui ont la valeur de qualité la plus faible.

9.  Dispositif pour atteindre une capacité prédéterminée de correction des erreurs R sur un réseau de communication de données qui effectue un codage distribué de correction des erreurs, le réseau de communication étant formé d'une pluralité de K noeuds de source, de N noeuds relais et de D noeuds de destination interconnectés par une pluralité de connexions, le dispositif étant conçu pour configurer le réseau et le dispositif comprenant :

- un moyen de détermination conçu pour déterminer si le réseau de communication possède une capacité de correction des erreurs par le réseau égale à R en vérifiant si un ensemble prédéterminé de conditions est satisfait ; et
- un moyen de reconfiguration qui, s'il est déterminé que le réseau de communication ne possède pas une capacité de correction des erreurs par le réseau au moins égale à R, est conçu pour reconfigurer le réseau de communication, **caractérisé en ce que** la reconfiguration du réseau de communication comprend au moins une étape consistant à ajouter au moins une connexion et à activer au moins un noeud relai dans ledit réseau de communication, au moins un de ladite connexion à ajouter et ledit noeud relai à activer dépendant d'au moins une condition qui n'était pas satisfaite ;

dans lequel l'ensemble de conditions comprend au moins :

- une première condition (430) étant qu'il y ait assez de noeuds relais par rapport à la pluralité de noeuds de source ;
- une deuxième condition (440) étant que tout ensemble non vide $\Sigma$ de noeuds de source, parmi la pluralité de noeuds de source, possède suffisamment de connexions avec les noeuds relais ; et
- une troisième condition (450) étant qu'il existe suffisamment de connexions entre les noeuds relais et les noeuds de destination par rapport à l'ensemble de noeuds de source qui est le moins connecté aux noeuds relais ;

dans lequel la première condition est satisfaite si le nombre N de noeuds relais moins le nombre K de noeuds de source est égal ou supérieur à R ;

dans lequel la deuxième condition est satisfaite si tout ensemble non vide $\Sigma$, parmi la pluralité de K noeuds de source, est connecté à au moins R + card ($\Sigma$) noeuds relais parmi les N noeuds relais, où card ($\Sigma$) est le cardinal de $\Sigma$ ;

dans lequel la troisième condition est satisfaite si R est inférieur à M - N + card ($SR_{min}$), où
- $SR_{min}$ est le plus petit ensemble de noeuds relais connectés à un noeud de destination ; et
- M est la différence minimale, pour tous les ensembles possibles de noeuds de source, entre le cardinal de l'ensemble de noeuds relais connectés à l'ensemble de noeuds de source et le cardinal dudit ensemble de noeuds de source.

10. Programme d'ordinateur pouvant être chargé dans un système informatique, ledit programme contenant des instructions permettant la mise en oeuvre du procédé selon l'une quelconque des revendications 1 à 8 lorsque le programme est chargé et exécuté par un système informatique.

11. Support d'informations lisible par un ordinateur ou un microprocesseur, amovible ou non, portant des instructions d'un programme d'ordinateur, **caractérisé en ce qu'**il permet la mise en oeuvre du procédé selon l'une quelconque des revendications 1 à 8.

Figure 1

EP 2 360 870 B1

Figure 2

EP 2 360 870 B1

Figure 3a

Figure 3b

**405** Start

**410** Reception of a "change network" notification

**415** Reception of a "reconfiguration done" notification

**420** Collecting the network topology

**425** network graph construction

**430** test 1 : check relay number — no → **435** Topology reconfiguration based on test 1

yes

**440** test 2 : check source nodes — no → **445** Topology reconfiguration based on test 2

yes

**450** test 3 : check destination nodes — no → **455** Topology reconfiguration based on test 3

**460** Is Power save mode active ?

**462** power save mode : topology reconfiguration

**465** distributed error correction code construction

**470** Decompose matrix through GJ elimination

**475** Wait for start of timeslot 303

**480** Send Control Frame 350

**485** Stop

Figure 4

EP 2 360 870 B1

505
ind = 1

510
$rr_{ind}=N-K+1$

515
ind =ind +1

520
ind=N+1 ─ no
│ yes

525
Determination of the sub-sets of the set of dource nodes

530
Selection of a sub-set Σ

535
Determination of the relay nodes connected to Σ : R(Σ)

540
$n(Σ) = card(R(Σ)) - card(Σ)$

545
$n(Σ)<R$ ── yes
│ no

550
Store set Σ in list L

555
ind = 1

557
$R_{ind} \in R(Σ)$ ── no
│ yes

560
$rr_{ind} = min(rr_{ind}, n(Σ))$

565
ind = ind +1

570
ind = N+1 ── yes

575
All sub-sets tested ? ── no
│ yes

577
M = min($rr_{ind}$)
Store M

580
M≥R ── yes → 585 TRUE
│ no

590
Ranking the relay nodes according to $rr_{ind}$

595
Ranking the source nodes according to their connectivity

596
FALSE

Figure 5

Figure 6

605 — i = 1

610 — Determination of sub-set $SR_i$ of relay nodes connected to the destination node $d_i$

615 — Store $SR_i$

620 — i=i+1

625 — i=D+1
no / yes

630 — $SR_{min}$ = minimal set $N_i$

635 — M≥R+N-card($SR_{min}$)
yes / no

650 — TRUE

640 — Determination of the list of destination nodes not sufficiently connected and of associated relay nodes

645 — FALSE

705 — Nb_rel_to_delete
= M-R+N-card($N_{min}$)

710 — $rr_{max}$= max($rr_i$)

715 — $K_{rr}$ = the set of relay
nodes having rr equal
to $rr_{max}$

720 — Selection of
Nb_rel_to_delete
relay nodes of $K_{rr}$

725 — Deactivation of the
Nb_rel_to_delete
selected relay nodes

Figure 7

**Figure 8b**

840: i = 1

845: $C_i = \text{card}(SR_i) - \text{card}(SR_{min})$

850: Selection of $C_i$ links based on its quality

855: Deactivation of the selected link

860: i=D+1
— no
— yes

865: END

**Figure 8a**

805: Selection of one link l between the source nodes and the relay nodes based on its quality

810: network graph construction without l

815: test 1 : check relay number
— no
— yes

820: test 2 : check source nodes
— no
— yes

825: test 3 : check destination nodes
— no
— yes

835: Keep the selected link

830: Deactivation of the selected link

28

Figure 9

## Figure 10a

```
        1000
          Start

        1001
   Reception of Control Frame
            350

        1002
   Extraction of N and K (field 351)

        1003
   Extraction of source Id list (field 352)

        1004
   Extraction of relevant relay coefficients
   α_{i1}, α_{i2}, ..., α_{iK} (field 36i)

        1005
   Store said relay coefficients
   α_{i1}, α_{i2}, ..., α_{iK}

        1006
           Stop
```

Figure 10a

## Figure 10b

```
   1050
        Start of a Super-Frame 300

   1051
          j := 1

   1052
   Start of timeslot for SRC_j

   1053
        SRC_j connected?

   1054          yes
   Receive and store s_j
                          no

   1055
          j := j+1

   1056
           j≤K ?          yes

                 no
   1057
        Error reception?

           yes              no

   1058
   Calculate  r_i := Σ_{j=1}^{K} α_{ij}s_j

   1061
   Start of timeslot for REL_i

   1062                    1059
   Transmit error notification    Start of timeslot for REL_i

   1063
          Stop          Transmit r_i    1060
```

Figure 10b

```
            ┌──────────────────────────────────┐
            │   Start of a Super-Frame 300     │ ⌐ 1150
            └──────────────────────────────────┘
                           │
         1151 ⌐ ┌─────────┐
                │ i := 1  │
                └─────────┘
                           │
    1152     ┌──────────────────────────────┐
          ⌐  │  Start of timeslot for REL_i │
             └──────────────────────────────┘
                           │
      1153  ⌐ ┌──────────────────┐
             │  Reception of r_i │
             └──────────────────┘
                           │
                           ▼
      1154 ⌐        ◇ r_i successfully ◇
   no ◄─────────────   received ?      ─────────────► yes
1156                           
 ┌──────────────────────────┐              ┌──────────┐
 │ Store erasure at position i│            │ Store r_i│
 └──────────────────────────┘              └──────────┘
                  │         ┌──────────┐        1155
                  └────────►│ i := i+1 │◄───────┘
                  1157      └──────────┘
                                 │
                                 ▼
              1158 ⌐      ◇ i ≤ N ? ◇ ─────► yes
                                 │
                                 no
 1159 ⌐ ┌────────────────────────────────────────┐
        │ Reed-Solomon decoding of (r_1,r_2,...,r_N)│
        └────────────────────────────────────────┘
                           │
 1160 ⌐ ┌────────────────────────────────┐
        │  Solve linear equation system  │
        └────────────────────────────────┘
                           │
 1161 ⌐ ┌────────────────────────────────┐
        │  Output (s_1, s_2, ... , s_K)  │
        └────────────────────────────────┘
                           │
 1162 ⌐ ⬭ Stop ⬭
```

Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 24458540 A
- FR 2932630 A1
- US 2002090966 A